(19) Europäisches Patentamt / European Patent Office / Office européen des brevets

(11) **EP 3 777 308 B1**

(12) **FASCICULE DE BREVET EUROPEEN**

(45) Date de publication et mention de la délivrance du brevet:
**07.07.2021 Bulletin 2021/27**

(21) Numéro de dépôt: **19712213.8**

(22) Date de dépôt: **25.03.2019**

(51) Int Cl.:
*H04L 12/841* *(2013.01)*   *H04W 28/02* *(2009.01)*

(86) Numéro de dépôt international:
**PCT/EP2019/057456**

(87) Numéro de publication internationale:
**WO 2019/185552 (03.10.2019 Gazette 2019/40)**

(54) **PROCÉDÉ DE COMMUNICATION**

KOMMUNIKATIONSVERFAHREN

COMMUNICATION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.03.2018 FR 1852801**
**23.05.2018 FR 1854305**

(43) Date de publication de la demande:
**17.02.2021 Bulletin 2021/07**

(73) Titulaire: **Sagemcom Energy & Telecom SAS**
**92500 Rueil-Malmaison (FR)**

(72) Inventeurs:
• **TEBOULLE, Henri**
**92500 RUEIL MALMAISON (FR)**
• **LE GOURRIEREC, Marc**
**92500 RUEIL MALMAISON (FR)**

(74) Mandataire: **Cabinet Le Guen Maillet**
**3, impasse de la Vigie**
**CS 71840**
**35418 Saint-Malo Cedex (FR)**

(56) Documents cités:
**WO-A1-2016/174396     WO-A1-2018/011792**

## Description

L'invention concerne un procédé de communication, exécuté dans un réseau sans fil à grande portée et permettant une faible consommation d'énergie, un dispositif et un système mettant en œuvre le procédé. Un tel système connu de l'art antérieur est décrit par exemple dans la demande WO 2016/174396 A1.

L'Internet se transforme progressivement en un réseau étendu, appelé « Internet des objets », reliant toutes sortes d'objets devenus connectables. De nouveaux besoins en termes de réseaux sont alors apparus, et notamment des besoins en réseaux sans fil ayant une plus grande couverture que des réseaux cellulaires classiques et permettant de limiter une consommation d'énergie des équipements connectés. Parmi ces réseaux sans fil à grande portée et permettant une faible consommation d'énergie (« Low Power Wide Area Network (LPWAN) » en terminologie anglo-saxonne), on peut citer des réseaux basés sur la technologie LoRa (marque déposée) («Long Range » en terminologie anglo-saxonne). La technologie LoRa opère sur des bandes de fréquences connues sous l'appellation « *Bande ISM* » (Industrie, Science et Médical) comprenant des bandes de fréquences pouvant être utilisées librement pour des applications industrielles, scientifiques et médicales. La technologie LoRa est basée sur une technologie d'étalement de spectre permettant d'obtenir des communications bas débit ayant une bonne robustesse dans une bande ISM particulièrement bruitée.

Un réseau basé sur la technologie LoRa (appelé « réseau LoRa » par la suite) utilise un protocole appelé LoRaWAN. Un réseau LoRa est composé de stations de base ou passerelles (« gateways » en terminologie anglo-saxonne) généralement placées sur des points hauts afin de couvrir une grande zone géographique. Les passerelles sont aptes à détecter des messages émis dans leur zone par des équipements ou terminaux (« endpoints » en terminologie anglo-saxonne) et de les remonter vers au moins un serveur (« LoRa Network Server (LNS) » en terminologie anglo-saxonne) qui les traitera.

Dans un fonctionnement classique d'un réseau LoRa, un terminal désirant transmettre un message (*i.e.* des données) au serveur, transmet ce message dans une trame, dite trame montante, conforme au protocole LoRaWAN. La trame montante est transmise en mode multidiffusion (« broadcast » en terminologie anglo-saxonne). Cette trame montante est reçue par au moins une passerelle. Chaque passerelle ayant reçu la trame la décode et retransmet le message au serveur dans une requête HTTP (protocole de transfert hypertext, « HyperText Transfer Protocol » en terminologie anglo-saxonne). Si plusieurs passerelles ont reçu la trame, le serveur reçoit plusieurs requêtes HTTP contenant le message. Le serveur doit alors désigner parmi les passerelles ayant reçu la trame montante, la passerelle à utiliser pour relayer une réponse au message contenu dans la trame montante. La réponse est transmise du serveur à la passerelle désignée dans une requête HTTP, puis en point à point, de la passerelle désignée au terminal dans une trame descendante conforme au protocole LoRaWAN. Dans une majorité d'implémentations des réseaux LoRa, la passerelle désignée est celle offrant la qualité de transmission la meilleure avec le terminal ayant émis la trame montante. Un inconvénient de ces implémentations est que le relais des réponses à des trames montantes entre le serveur et les terminaux est souvent assuré par les mêmes passerelles ce qui peut provoquer des engorgements de la voie descendante de ces passerelles.

Une autre particularité des réseaux LoRa est que les passerelles sont des équipements fonctionnant selon un mode alternat ou semi-duplex (« half duplex » en terminologie anglo-saxonne). Par conséquent, une passerelle ne peut émettre et recevoir des données de terminaux simultanément. En effet, les passerelles LoRa ont des niveaux d'émission très élevés, de l'ordre de +27 dBm, par rapport à leur niveau de réception qui peut être de l'ordre de -140 dBm. Une telle différence entre les niveaux d'émission et de réception implique qu'une émission d'un message gênerait considérablement une réception simultanée d'un message, bien que les émissions et réceptions utilisent deux bandes de fréquences différentes. Cette contrainte d'utiliser des passerelles fonctionnant en mode semi-duplex nuit fortement aux performances des réseaux LoRa. Une solution possible consisterait à diviser les passerelles en une partie émission et une partie réception et à séparer géographiquement ces deux parties. Cette solution qui permettrait aux passerelles ainsi agencées d'émettre et recevoir simultanément (les passerelles deviendraient ainsi des équipements fonctionnant en mode duplex complet, « full duplex » en terminologie anglo-saxonne) pose un problème de synchronisation entre les deux parties. En effet, une passerelle désignée par un serveur pour relayer une réponse à un message qu'elle a reçu doit transmettre la réponse à un instant fixé par le serveur. Cet instant est calculé par le serveur en ajoutant une durée prédéfinie à un instant de réception de la trame montante contenant le message par ladite passerelle. Mais l'instant d'émission est calculé dans une base temporelle de la partie réception de la passerelle qui, sans synchronisation entre la partie émission et la partie réception de la passerelle, n'est pas connue de la partie émission. Il est courant de solutionner des problèmes de synchronisation entre des équipements distants en insérant dans chaque équipement un module de synchronisation sur une horloge commune tel qu'un module GPS (système de positionnement global, « Global Positioning System » en terminologie anglo-saxonne). Toutefois, insérer un module GPS dans chaque passerelle augmenterait à la fois le coût et la complexité des réseaux.

Il est souhaitable de pallier ces inconvénients de l'état de la technique. Il est notamment souhaitable de proposer une méthode qui permette à un réseau LoRa ne comportant que des passerelles fonctionnant en mode semi-duplex d'offrir une fonctionnalité duplex complet, la fonctionnalité duplex complet étant obtenue sans insertion d'un module de synchronisation sur une horloge commune dans chaque passerelle. De plus, il serait souhaitable que cette méthode permette d'éviter que le relai des réponses aux messages des terminaux sollicite toujours les mêmes passerelles.

Il est par ailleurs souhaitable de proposer une méthode qui soit simple à mettre en œuvre et à faible coût.

Selon un premier aspect de la présente invention, la présente invention concerne un procédé de communication, exécuté dans un réseau sans fil à grande portée et permettant une faible consommation d'énergie dans lequel des terminaux communiquent avec un serveur par l'intermédiaire de passerelles d'un ensemble de passerelles selon une technologie de communication impliquant que lorsque le serveur reçoit un message d'un terminal via une première passerelle, il fixe un instant auquel une passerelle doit relayer une réponse audit message en fonction d'un instant de réception dudit message par ladite première passerelle, chaque passerelle étant associée avec un ensemble de terminaux comprenant au moins un terminal utilisant ladite passerelle pour communiquer avec le serveur. Le procédé mis en œuvre par le serveur comprend : recevoir une requête en provenance d'une première passerelle contenant un message émis dans une trame, dite trame montante, par un terminal, dit terminal émetteur ; déterminer une seconde passerelle différente de la première passerelle à utiliser pour relayer une réponse audit message destinée au terminal émetteur, la seconde passerelle étant déterminée dans un sous-ensemble de passerelles de l'ensemble de passerelles comprenant la première passerelle et au moins une seconde passerelle, chaque passerelle du sous-ensemble étant capable de relayer vers un terminal une réponse à un message transmis dans une trame montante par ledit terminal reçue par n'importe quelle autre passerelle dudit sous-ensemble, les passerelles du sous-ensemble ayant au moins un terminal associé en commun et étant associées avec le terminal émetteur; ; transmettre une requête contenant ladite réponse à la seconde passerelle, ladite réponse étant retransmise par la seconde passerelle audit terminal émetteur dans une trame, dite trame descendante, à un instant indiqué dans la requête, ledit instant étant indiqué dans une référence temporelle de la première passerelle, la deuxième passerelle prenant en compte un écart d'horloge entre la première et la seconde passerelles pour transmettre la trame descendante audit instant.

Selon un mode de réalisation, la technologie de communication est la technologie LoRa et chaque trame échangée entre une passerelle et un terminal est conforme au protocole LoRaWAN.

Selon un mode de réalisation, l'ensemble de passerelles comprend une pluralité de sous-ensembles de passerelles, chaque sous-ensemble étant formé par un opérateur à partir de passerelles pouvant se suppléer entre elles pour relayer une réponse dans une trame descendante à un message reçu dans une trame montante par l'une d'entre elles ou par une procédure adaptative de formation des sous-ensembles exécutée périodiquement sous le contrôle du serveur avec une période prédéfinie.

Selon un mode de réalisation, le serveur transmet à chaque passerelle comprise dans un sous-ensemble des caractéristiques dudit sous-ensemble comprenant un identifiant pour chaque passerelle comprise dans ledit sous-ensemble et un identifiant pour chaque terminal associé en commun entre les passerelles du sous-ensemble.

Selon un mode de réalisation, la procédure adaptative de formation des sous-ensembles comprend : classer les passerelles de l'ensemble de passerelles par ordre décroissant d'un nombre de trames descendantes que chaque passerelle a émises pendant la dernière période prédéfinie ou par ordre décroissant d'un nombre de trames montantes que chaque passerelle a reçues pendant la dernière période prédéfinie ; parcourir les passerelles ainsi classées dans leur ordre de classement et pour chaque passerelle, classer chaque terminal associé avec ladite passerelle par ordre décroissant d'un nombre de trames montantes reçues dudit terminal par ladite passerelle pendant la dernière période prédéfinie ; parcourir les passerelles dans leur ordre de classement et pour chaque passerelle, définir un sous-ensemble de passerelles à partir de ladite passerelle, ladite passerelle, dite passerelle de base, appartenant audit sous-ensemble, la définition du sous-ensemble comprenant : tant qu'un nombre de terminaux dans un premier ensemble de terminaux associés au sous-ensemble de passerelles en cours de définition est supérieur à un pourcentage prédéfini d'un nombre de terminaux d'un deuxième ensemble de terminaux associés à la passerelle de base : identifier parmi les passerelles ainsi classées n'ayant pas encore été insérées dans le sous-ensemble, une passerelle ayant le plus de terminaux en commun avec la passerelle de base ; insérer la passerelle ainsi identifiée dans le sous-ensemble ; et, former le premier ensemble de terminaux comme une intersection entre le deuxième ensemble de terminaux et chaque ensemble de terminaux associé avec une passerelle insérée dans le sous-ensemble ; et, supprimer chaque terminal compris dans le premier ensemble de terminaux des ensembles de terminaux associés aux passerelles ainsi classées.

Selon un mode de réalisation, lorsque les passerelles sont classées par ordre décroissant du nombre de trames descendantes que chaque passerelle a émises pendant la dernière période prédéfinie, seules les passerelles qui ont émis au moins un nombre prédéterminé de trames descendantes pendant la dernière période prédéfinie sont classées, et lorsque les passerelles sont classées par ordre décroissant du nombre de trames montantes que chaque passerelle a reçues pendant la dernière période prédéfinie, seules les passerelles qui ont reçu au moins un nombre prédéterminé de trames montantes pendant la dernière période prédéfinie sont classées.

Selon un mode de réalisation, lorsqu'une passerelle a été insérée dans un sous-ensemble formé à partir d'une passerelle de base, cette passerelle ne peut plus être insérée dans un sous-ensemble formé à partir de toutes autres passerelles de base.

Selon un mode de réalisation, la procédure adaptative de formation des sous-ensembles s'arrête lorsque toutes les passerelles classées ont été insérées dans un sous-ensemble ou lorsque tous les terminaux du réseau sont compris dans un ensemble de terminaux associé à un sous-ensemble.

Selon un mode de réalisation, l'écart d'horloge existant entre deux passerelles est déterminé par une procédure de synchronisation, la procédure de synchronisation étant exécutée par l'une des deux passerelles, dite passerelle initiatrice, en collaboration avec l'autre passerelle, dite passerelle collaboratrice et comprenant : transmettre une trame montante à destination de la passerelle collaboratrice, la passerelle initiatrice se mettant en attente pendant une période prédéterminée avant de se mettre en écoute d'une réponse à ladite trame montante, ladite réponse étant transmise dans une trame descendante par la passerelle collaboratrice après une période égale à la période prédéterminée suivant une réception de ladite trame par la passerelle collaboratrice, une première information représentative d'un instant de réception de ladite requête par la passerelle collaboratrice à laquelle a été ajoutée la durée de la période prédéterminée étant insérée dans ladite réponse par la passerelle collaboratrice ; recevoir ladite réponse et obtenir une deuxième information représentative d'un instant de réception de ladite réponse par la seconde passerelle ; et, calculer l'écart d'horloge entre la passerelle initiatrice et la passerelle collaboratrice comme une différence entre la deuxième et la première informations.

Selon un mode de réalisation, la procédure de synchronisation est exécutée dans chaque sous-ensemble pour chaque paire de passerelles possibles dudit sous-ensemble, chaque passerelle d'une paire de passerelles étant alternativement initiatrice ou collaboratrice, à intervalles réguliers prédéfinis ou intervalles adaptatifs de durées dépendantes d'une évolution des écarts d'horloge au cours du temps.

Selon un mode de réalisation, la seconde passerelle est déterminée aléatoirement dans le sous-ensemble de passerelles comprenant la première passerelle ou, aléatoirement parmi un nombre prédéfini de passerelles dudit sous-ensemble offrant une qualité de communication avec le terminal émetteur la plus élevée parmi les passerelles dudit sous-ensemble.

Selon un mode de réalisation, la seconde passerelle est déterminée en prenant en compte une valeur de compteur représentative d'un nombre de trames descendantes transmises par les passerelles dudit sous-ensemble en réponse à des messages transmis dans des trames montantes par des terminaux.

Selon un mode de réalisation, la seconde passerelle déterminée est associée à la valeur de compteur la plus faible parmi les valeurs de compteur associées aux passerelles dudit sous-ensemble.

Selon un mode de réalisation, la seconde passerelle est déterminée en exécutant une procédure de choix comprenant : présélectionner un nombre prédéfini de passerelles associées aux valeurs de compteurs les plus faibles parmi les valeurs de compteurs associées aux passerelles dudit sous-ensemble ; choisir une passerelle associée à une valeur représentative d'une qualité de communication avec le terminal émetteur supérieure ou égale à un seuil de qualité prédéfini parmi les passerelles du nombre prédéfini de passerelles présélectionnées, la passerelle choisie devenant la seconde passerelle.

Selon un mode de réalisation, lorsqu'aucune passerelle du nombre prédéfini de passerelles n'est associée à une valeur représentative d'une qualité de communication avec le terminal émetteur supérieure ou égale au seuil de qualité prédéfini, choisir une passerelle du sous-ensemble associée à la valeur de compteur la plus faible parmi les valeurs de compteurs associées aux passerelles dudit sous-ensemble et associée à une valeur représentative d'une qualité de communication avec le terminal émetteur supérieure ou égale au seuil de qualité prédéfini ; et, si aucune passerelle dudit sous-ensemble n'est associée à une valeur représentative d'une qualité de communication avec le terminal émetteur supérieure ou égale au seuil de qualité prédéfini, choisir une passerelle associée à la valeur représentative d'une qualité de communication avec le terminal émetteur maximum parmi les valeurs représentatives d'une qualité de communication avec le terminal émetteur associées aux passerelles dudit sous-ensemble.

Selon un mode de réalisation, lorsque le serveur reçoit une pluralité de requêtes contenant chacune un même message émis dans une trame montante par un terminal émetteur associé à aucun sous-ensemble, le procédé comprend : choisir parmi les premières passerelles ayant remonté ledit message vers le serveur, une passerelle dont une qualité de réception de ladite trame est supérieure ou égale à un seuil de qualité prédéfini ; et, transmettre une requête contenant ladite réponse à la passerelle choisie, ladite réponse étant retransmise par la passerelle choisie audit terminal émetteur dans une trame descendante.

Selon un deuxième aspect de l'invention, l'invention concerne un dispositif de type serveur compris dans un réseau sans fil à grande portée et permettant une faible consommation d'énergie dans lequel des terminaux communiquent avec le serveur par l'intermédiaire de passerelles d'un ensemble de passerelles selon une technologie de communication impliquant que lorsque le serveur reçoit un message d'un terminal via une première passerelle, il fixe un instant auquel une passerelle doit relayer une réponse audit message en fonction d'un instant de réception dudit message par ladite première passerelle, chaque passerelle étant associée avec un ensemble de terminaux comprenant au moins un terminal utilisant ladite passerelle pour communiquer avec le serveur. Le dispositif comprend : des moyens de réception pour recevoir une requête en provenance d'une première passerelle contenant un message émis dans une trame, dite trame montante, par un terminal, dit terminal émetteur ; des moyens de détermination pour déterminer une seconde passerelle différente de la première passerelle à utiliser pour relayer une réponse audit message destinée au terminal émetteur, la seconde passerelle étant déterminée dans un sous-ensemble de passerelles de l'ensemble de passerelles comprenant la première passerelle et au moins une seconde passerelle, chaque passerelle du sous-ensemble étant capable de relayer vers un terminal une réponse à un message transmis dans une trame montante par ledit terminal reçue par n'importe quelle autre passerelle dudit sous-ensemble, les passerelles du sous-ensemble ayant au moins un terminal associé en commun et étant associées avec le terminal émetteur ; des moyens de transmission pour transmettre une requête contenant ladite réponse à la seconde passerelle, ladite réponse étant retransmise par la seconde passerelle au terminal émetteur dans une trame dite trame descendante à un instant indiqué dans la requête, ledit instant étant indiqué dans une référence temporelle de la première passerelle, la deuxième passerelle prenant en compte un écart d'horloge entre la première et la seconde passerelles pour transmettre la trame descendante audit instant.

Selon un troisième aspect de l'invention, l'invention concerne un système compris dans un réseau sans fil à grande portée et permettant une faible consommation d'énergie comprenant un dispositif de type serveur selon le deuxième aspect, une pluralité de terminaux et une pluralité de passerelles, chaque passerelle du sous-ensemble étant capable de relayer vers un terminal une réponse à un message transmis dans une trame montante par ledit terminal reçue par n'importe quelle autre passerelle dudit sous-ensemble, les passerelles du sous-ensemble ayant au moins un terminal associé en commun.

Selon un quatrième aspect de l'invention, l'invention concerne un programme d'ordinateur, comprenant des instructions pour mettre en œuvre, par un dispositif, le procédé selon le premier aspect, lorsque ledit programme est exécuté par un processeur dudit dispositif.

Selon un cinquième aspect de l'invention, l'invention concerne des moyens de stockage stockant un programme d'ordinateur comprenant des instructions pour mettre en œuvre, par un dispositif, le procédé selon le premier aspect, lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un réseau LoRa dans lequel est mis en œuvre l'invention ;
- la Fig. 2A illustre schématiquement un module de traitement compris dans un serveur ;
- la Fig. 2B illustre schématiquement un module de traitement compris dans une passerelle ;
- la Fig. 3 illustre schématiquement un procédé de communication selon l'invention ;
- la Fig. 4 illustre schématiquement une procédure de synchronisation selon l'invention ;
- la Fig. 5A illustre schématiquement un premier exemple de procédure adaptative de formation de sous-ensembles de passerelles selon l'invention ;
- la Fig. 5B illustre schématiquement un deuxième exemple de procédure adaptative de formation de sous-ensembles de passerelles selon l'invention ;
- la Fig. 6 illustre schématiquement en détails la formation des sous-ensembles de passerelles ; et,
- la Fig. 7 illustre schématiquement une procédure de choix d'une passerelle devant relayer une réponse à un message émanant d'un terminal.

L'invention est décrite par la suite dans un contexte de réseau LoRa. L'invention s'applique toutefois dans d'autres contextes pour tous types de réseaux sans fil à grande portée et permettant une faible consommation d'énergie dans lesquels des terminaux communiquent avec un serveur central via des passerelles semiduplex.

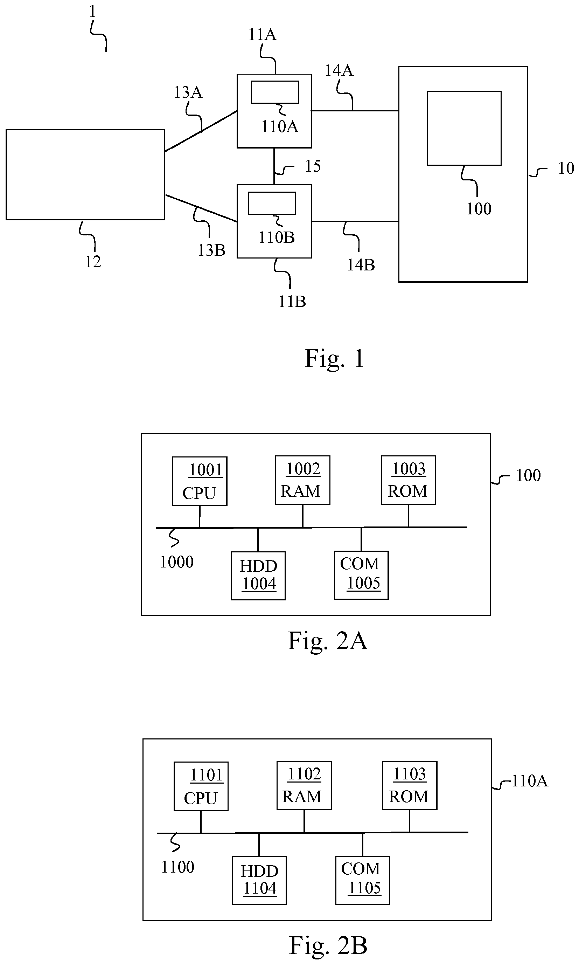

La Fig. 1 illustre schématiquement un exemple de réseau LoRa 1 dans lequel est mise en œuvre l'invention.

Dans l'exemple de la Fig. 1, le réseau LoRa 1 comprend un serveur 10, un ensemble de passerelles comprenant au moins deux passerelles (dans la Fig. 1 seules deux passerelles 11A et 11B sont représentées) et au moins un terminal (dans la Fig. 1 seul un terminal 12 est représenté). Chaque passerelle communique avec le serveur 10 par l'intermédiaire d'un lien de communication filaire ou sans fil. Par exemple la passerelle 11A (respectivement la passerelle 11B) communique avec le serveur 10 par l'intermédiaire d'un lien de communication filaire ou sans fil 14A (respectivement 14B). De plus, chaque communication entre une passerelle et un terminal utilise un lien de communication sans fils. Par exemple, la passerelle 11A (respectivement la passerelle 11B) communique avec le terminal 12 par l'intermédiaire d'un lien de communication sans fil 13A (respectivement 13B).

Le serveur 10 comprend un module de traitement 100. Chaque passerelle comprend un module de traitement. Par exemple, la passerelle 11A (respectivement 11B) comprend un module de traitement 110A (respectivement 110B).

Dans un mode de réalisation, certaines passerelles peuvent communiquer entre elles. Pour ce faire, chaque passerelle souhaitant communiquer avec une autre passerelle utilise une fonctionnalité qui est de permettre à une passerelle de se faire passer temporairement pour un terminal. Par exemple, les passerelles 11A et 11B peuvent communiquer entre elles par l'intermédiaire d'un lien de communication sans fil 15.

On note que dans le réseau LoRa 1, les communications entre les terminaux et les passerelles et les communications entre passerelles utilisent des trames compatibles avec le protocole LoRaWAN. Le document LoRaWAN 1.1 (« draft LoRaWAN 1.1 » en terminologie anglo-saxonne) d'août 2015 définit les communications entre les terminaux et les passerelles d'un réseau LoRa.

La **Fig. 2A** illustre schématiquement un exemple d'architecture matérielle du module de traitement 100 compris dans le serveur centralisé 10.

Selon l'exemple d'architecture matérielle représenté à la Fig. 2A, le module de traitement 100 comprend alors, reliés par un bus de communication 1000 : un processeur ou CPU (« Central Processing Unit » en terminologie anglo-saxonne) 1001 ; une mémoire vive RAM (« Random Access Memory » en terminologie anglo-saxonne) 1002 ; une mémoire morte ROM (« Read Only Memory » en terminologie anglo-saxonne) 1003 ; une unité de stockage telle qu'un disque dur ou un lecteur de support de stockage, tel qu'un lecteur de cartes SD (« Secure Digital » en terminologie anglo-saxonne) 1004 ; au moins une interface de communication 1005 permettant au module de traitement 100 de communiquer avec d'autres modules ou dispositifs. Par exemple, l'interface de communication 1005 permet au module de traitement 100 de communiquer avec les passerelles du réseau LoRa 1 telles que les passerelles 11A et 11B ou avec des serveurs distants appartenant au nuage (« cloud » en terminologie anglo-saxonne).

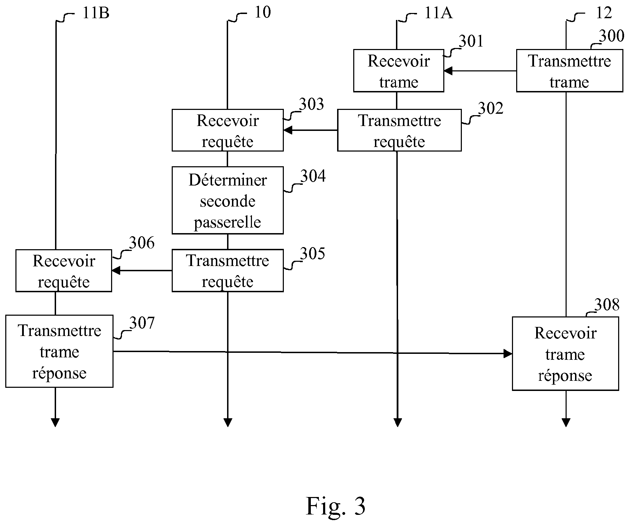

Le processeur 1001 est capable d'exécuter des instructions chargées dans la RAM 1002 à partir de la ROM 1003, d'une mémoire externe (non représentée), d'un support de stockage (tel qu'une carte SD), ou d'un réseau de communication. Lorsque le serveur 10 est mis sous tension, le processeur 1001 est capable de lire de la RAM 1002 des instructions et de les exécuter. Dans un mode de réalisation, ces instructions forment un programme d'ordinateur causant la mise en œuvre complète ou partielle, par le processeur 1001, des procédés décrits ci-après en relation avec les Figs. 3, 4, 5A, 5B et 6.

La **Fig. 2B** illustre schématiquement un exemple d'architecture matérielle du module de traitement 110A compris dans la passerelle LoRa 11A. Le module de traitement 110B est identique.

Selon l'exemple d'architecture matérielle représenté à la Fig. 2B, le module de traitement 110A comprend alors, reliés par un bus de communication 1100 : un processeur ou CPU 1101 ; une mémoire vive RAM 1102 ; une mémoire morte ROM 1103 ; une unité de stockage telle qu'un disque dur ou un lecteur de support de stockage, tel qu'un lecteur de cartes SD 1104; au moins une interface de communication 1105 permettant au module de traitement 110A de communiquer avec d'autres modules ou dispositifs. Par exemple l'interface de communication 1105 permet au module de traitement 110A de communiquer avec le serveur 10, avec d'autres passerelles du réseau LoRa 1 telles que la passerelle 11B ou avec des terminaux du réseau LoRa 1 tels que le terminal 12. Dans un mode de réalisation, le module de traitement 110A comprend en outre un module de comptage apte à fournir une valeur de comptage $CPRT_i$ codée sur « 32 » bits et incrémentée d'une unité à chaque microseconde, $i$ étant un identifiant du module de traitement (i.e. i= 110A pour le module de comptage du module de traitement 110A).

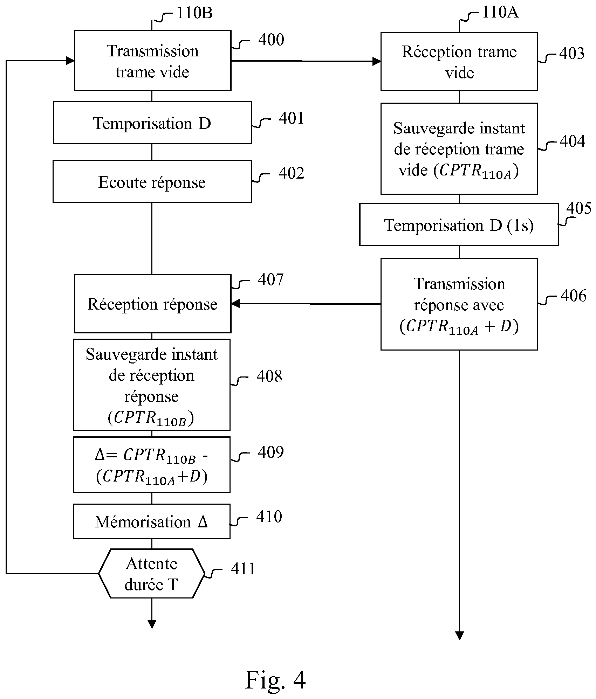

Le processeur 1101 est capable d'exécuter des instructions chargées dans la RAM 1002 à partir de la ROM 1003, d'une mémoire externe (non représentée), d'un support de stockage (tel qu'une carte SD), ou d'un réseau de communication. Lorsque la passerelle 11A est mise sous tension, le processeur 1101 est capable de lire de la RAM 1102 des instructions et de les exécuter. Dans un mode de réalisation, ces instructions forment un programme d'ordinateur causant la mise en œuvre complète ou partielle, par le processeur 1101, des procédés décrits ci-après en relation avec les Figs. 3 et 4.

Les procédés décrits en relation avec les Figs. 3, 4, 5A, 5B et 6 peuvent être implémentés sous forme logicielle par exécution d'un ensemble d'instructions par une machine programmable, par exemple un DSP (« Digital Signal Processor » en terminologie anglo-saxonne) ou un microcontrôleur, ou être implémentés sous forme matérielle par une machine ou un composant dédié, par exemple un FPGA (« Field-Programmable Gate Array » en terminologie anglo-saxonne) ou un ASIC (« Application-Specific Integrated Circuit » en terminologie anglo-saxonne).

La **Fig.3** illustre schématiquement un procédé de communication selon l'invention.

Dans une étape 300, le terminal 12 émet une trame conforme au protocole LoRaWAN à destination du serveur 10. Cette trame, dite trame montante, est transmise en mode multidiffusion de sorte que chaque passerelle à portée du terminal 12 reçoit cette trame montante. Dans l'exemple du réseau LoRa 1, on suppose que la passerelle 11A, dite passerelle LM (Liaison Montante, « Uplink » en terminologie anglo-saxonne), reçoit chaque trame montante transmise par le terminal 12.

Dans une étape 301, le module de traitement 110A de la passerelle 11A reçoit donc la trame montante.

Lorsqu'une passerelle d'un réseau LoRa reçoit une trame montante contenant un message destiné à un serveur, elle la décode et insère le message contenu dans cette trame montante dans une requête HTTP, dite requête HTTP montante, puis transmet cette requête HTTP montante au serveur du réseau LoRa en point à point. Lors d'une étape 302, la module de traitement 110A décode et insère le message contenu dans la trame montante dans une requête HTTP montante, puis transmet cette requête HTTP montante au serveur 10 en point à point. En outre, la requête comprend une information représentative d'un instant de réception de la trame montante par la passerelle 11A. Cette information représentative de l'instant de réception de la trame montante est fournie au module de traitement 110A par son module de comptage. Cette information représentative de l'instant de réception de la trame montante a donc été mesurée dans un référentiel temporel de la passerelle 11A.

Dans une étape 303, le module de traitement 100 du serveur 10 reçoit la requête HTTP montante contenant le message émis dans la trame montante par le terminal 12.

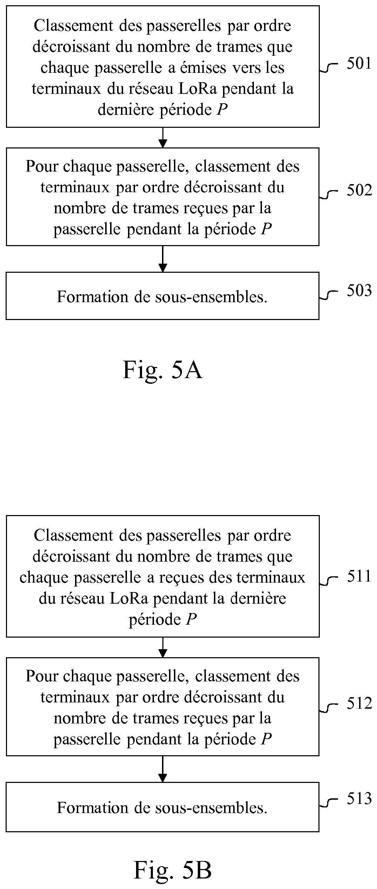

Dans une étape 304, le module de traitement 100 détermine une seconde passerelle, dite passerelle LD (Liaison Descendante, « downstream » en terminologie anglo-saxonne) différente de la passerelle 11A (i.e. passerelle LM) à utiliser pour relayer une réponse au message contenu dans la trame montante destinée au terminal 12. L'ensemble des passerelles du réseau LoRa 1 est composé d'une pluralité de sous-ensembles de passerelles. Chaque sous-ensemble de passerelles comprend des passerelles capables de relayer vers un terminal une réponse à un message contenu dans une trame montante, transmise par ledit terminal, reçue par n'importe quelle autre passerelle dudit sous-ensemble. Chaque passerelle d'un sous-ensemble peut être alternativement une passerelle LM ou une passerelle LD. Chaque passerelle d'un sous-ensemble ayant reçu une trame montante est considérée comme une passerelle LM. Chaque passerelle d'un sous-ensemble relayant une réponse à un message contenu dans une trame montante reçue par une autre passerelle du sous-ensemble, c'est-à-dire relayant une réponse à un message contenu dans une trame montante pour le compte d'une autre passerelle du sous-ensemble, est considérée comme une passerelle LD. Chaque sous-ensemble comprend donc au moins une première et une seconde passerelles. La première passerelle peut être alternativement une passerelle LM ou une passerelle LD. La seconde passerelle peut être une passerelle LD quand la première passerelle est une passerelle LM, ou une passerelle LM lorsque la première passerelle est une passerelle LD. Les passerelles d'un sous-ensemble ont au moins un terminal associé en commun entre elles. Une passerelle est considérée comme associée à un terminal lorsqu'elle a reçu des trames montantes en provenance dudit terminal pendant une période récente. Par ailleurs, chaque passerelle d'un sous-ensemble est associée au moins au terminal ayant émis la trame montante reçue par une passerelle LM du sous-ensemble. Lors de l'étape 304, la passerelle LD est donc déterminée dans un sous-ensemble comprenant la passerelle 11A et dans lequel chaque passerelle est au moins associée au terminal 12. Dans l'exemple décrit en relation avec la Fig. 3, la passerelle LD déterminée est la passerelle 11B. On note que, bien que la trame montante ait été transmise en mode multidiffusion, la passerelle 11B n'a pas forcément reçu cette trame. Nous décrivons par la suite en relation avec les Figs. 5A et 5B deux exemples de procédures permettant de créer des sous-ensembles de passerelles à partir de l'ensemble de passerelles du réseau LoRa 1. On note que dans l'invention, c'est le serveur 10 ou un serveur distant du nuage à la demande du serveur 10 qui détient des caractéristiques de chaque sous-ensemble. Le serveur 10 (ou serveur distant du nuage sous le contrôle du serveur 10) a soit défini ces sous-ensembles, soit obtenu ces sous-ensembles lors d'une configuration du réseau LoRa 1 par un opérateur. Ces caractéristiques comprennent un identifiant pour chaque passerelle appartenant audit sous-ensemble et un identifiant pour chaque terminal associé en commun entre toutes les passerelles dudit-sous-ensemble. Le serveur 10 transmet les caractéristiques de chaque sous-ensemble à chaque passerelle appartenant audit sous-ensemble à chaque fois que ledit sous-ensemble est défini ou mis à jour.

Dans une étape 305, le module de traitement 100 transmet une requête HTTP contenant ladite réponse à la passerelle 11B. Cette requête comprend en outre une information représentative d'un instant de transmission souhaité de la trame descendante correspondant à ladite requête par la passerelle 11B. Cet instant de transmission est calculé par le module de traitement 100 par rapport à l'information représentative de l'instant de réception de la trame montante par la passerelle 11A. Ce calcul consiste à ajouter une durée prédéfinie D audit instant de réception. Par exemple, D=ls. L'instant de transmission est donc calculé par rapport à une référence temporelle de la passerelle 11A (i.e. de la passerelle LM).

Dans une étape 306, le module de traitement 110B de la passerelle 11B reçoit la requête HTTP contenant ladite réponse.

Dans une étape 307, le module de traitement 110B génère une trame descendante contenant la réponse et la transmet en point à point au terminal 12 à un instant correspondant à l'information représentative de l'instant de transmission souhaité. Comme décrit plus haut, l'instant de transmission souhaité a été calculé par rapport à la référence temporelle de la passerelle 11A. Or la passerelle 11B ne fonctionne pas avec la même référence temporelle. En effet, la référence temporelle de la passerelle 11B est donnée par le module de comptage du module de traitement 110B, qui, bien qu'identique au module de comptage du module de traitement 110A, est généralement décalé par rapport au module de comptage du module de traitement 110A. Par ailleurs, même si les deux modules de comptage avaient été synchronisés à un moment, ils peuvent l'un et l'autre subir des dérives différentes dans le temps. Pour compenser ce décalage, le module de traitement 110B prend en compte un écart d'horloge Δ entre la passerelle 11A et la passerelle 11B. Cet écart d'horloge Δ est obtenu par le module de traitement 110B en mettant en œuvre régulièrement une procédure de synchronisation décrite par la suite en relation avec la Fig. 4.

Dans une étape 308, le terminal 12 reçoit la trame descendante contenant la réponse au message contenu dans la trame montante.

Dans un mode de réalisation, lors de l'étape 304, si le sous-ensemble de passerelles dans lequel a été déterminée la passerelle 11B *(i.e.* la passerelle LD) comprend une pluralité de passerelles susceptibles de devenir une passerelle LD pour le compte de la passerelle 11A *(i.e.* de la passerelle LM), le module de traitement 100 détermine la passerelle LD parmi les passerelles de la pluralité de manière aléatoire.

Dans un mode de réalisation, lors de l'étape 304, si le sous-ensemble de passerelles dans lequel a été déterminé la passerelle 11B comprend une pluralité de passerelles susceptibles de devenir une passerelle LD pour le compte de la passerelle 11A, le module de traitement 100 détermine la passerelle LD parmi un nombre n de passerelles de la pluralité offrant la meilleure qualité de communication avec le terminal 12 de manière aléatoire. Par exemple, si le sous-ensemble comprend un nombre *m* de passerelles, *m* étant égal à 100, *n*=10.

La **Fig. 4** illustre schématiquement une procédure de synchronisation selon l'invention.

La procédure de synchronisation est exécutée, dans chaque sous-ensemble, pour chaque paire possible de passerelles comprises dans ledit sous-ensemble. La procédure de synchronisation entre deux passerelles d'une paire est unidirectionnelle. En effet, en supposant qu'une des deux passerelles de la paire, dite passerelle initiatrice, est celle qui a initié la procédure de synchronisation, la procédure de synchronisation permet à la passerelle initiatrice de connaître l'écart d'horloge Δ existant entre les deux passerelles de la paire. L'autre passerelle de la paire, dite passerelle collaboratrice, n'ayant pas initié la procédure de synchronisation, ne connaît pas l'écart d'horloge Δ à la fin de l'exécution de la procédure de synchronisation. Il faut donc exécuter deux fois la procédure de synchronisation pour que les deux passerelles d'une paire connaissent l'écart d'horloge Δ, chaque passerelle d'une paire devenant alternativement initiatrice et collaboratrice. Cette procédure est exécutée par exemple à intervalles réguliers prédéfinis de durée T. Dans un mode de réalisation *T*=10s.

Dans la Figure 4, la procédure de synchronisation est exécutée entre les passerelles 11A et 11B, la passerelle 11B étant celle qui initie ladite procédure. Dans cet exemple donc, seule la passerelle 11B connaît l'écart d'horloge Δ à la fin de l'exécution de la procédure de synchronisation.

Dans une étape 400, le module de traitement 110B transmet une trame montante en mode multidiffusion. Pour ce faire, la passerelle 11B se comporte comme un terminal appelé TERM_11B. La trame montante est considérée comme une trame vide puisqu'elle ne contient pas de données utiles mais uniquement des données d'entêtes conformes au protocole LoRaWAN dont une adresse addr_TERM_11B du terminal TERM 11B.

Dans une étape 401, suite à cette transmission, le module de traitement 110B se met en attente pendant une durée *D*. Dans un mode de réalisation, *D*=1s.

A la fin de la durée *D*, le module de traitement 110B se met en écoute d'une réponse à sa trame montante vide dans une étape 402.

Dans une étape 403, le module de traitement 110A de la passerelle 11A reçoit la trame montante vide de la passerelle 11B. Le module de traitement 110A reconnaît le terminal TERM_11B (et donc la passerelle 11B) grâce à l'adresse addr_TERM_11B contenue dans la trame montante vide. En effet, l'adresse addr_TERM_11B est un identifiant de la passerelle 11B contenu dans les caractéristiques du sous-ensemble comprenant la passerelle 11A transmises par le serveur 10 à toutes les passerelles comprises dans ce sous-ensemble.

Dans une étape 404, le module de traitement 110A sauvegarde une valeur courante $CPRT_{110A}$ de son module de comptage. La valeur courante $CPRT_{110A}$ est une information représentative d'un instant de réception par la passerelle 11A de la trame montante vide provenant du terminal TERM_11B (*i.e.* de la passerelle 11B).

Dans une étape 405, suite à la réception de la trame montante vide, le module de traitement 110B se met en attente pendant la durée *D*.

A la fin de la durée *D*, le module de traitement 110A transmet une réponse à la trame montante vide dans une étape 406. Cette réponse est transmise sous forme de trame descendante en point à point à destination de la passerelle 11B. Cette réponse comprend l'information représentative de l'instant de réception par la passerelle 11A de la trame montante vide auquel a été ajoutée la durée *D,* c'est-à-dire $CPRT_{110A} + D.$

Dans une étape 407, le module de traitement 110B reçoit la trame descendante contenant la réponse.

Dans une étape 408, le module de traitement 110B sauvegarde une valeur courante $CPRT_{110B}$ de son module de comptage. La valeur courante $CPRT_{110B}$ est une information représentative d'un instant de réception par la passerelle 11B de la trame descendante provenant de la passerelle 11A.

Dans une étape 409, le module de traitement 110B calcule un écart d'horloge Δ entre les horloges des passerelles 11A et 11B :

$$\Delta = CPRT_{110B} - (CPRT_{110A} + D)$$

Dans une étape 410, le module de traitement 110B mémorise l'écart d'horloge Δ. L'écart d'horloge Δ est utilisé lors de l'étape 307.

Dans une étape 411, le module de traitement 110B se met en attente pendant la durée de l'intervalle régulier prédéfini *T* puis retourne à l'étape 400 pour remettre à jour l'écart d'horloge Δ.

Dans un mode de réalisation, la durée de l'intervalle entre deux lancements de la procédure de synchronisation n'est pas prédéfinie mais adaptative. Par exemple, cette durée d'intervalle, notée $T_{adapt}$ dépend d'une évolution des écarts Δ au cours du temps. Si le module de traitement de la passerelle initiatrice (ici la passerelle 110B) constate qu'une valeur absolue de l'écart d'horloge |Δ| augmente alors la durée de l'intervalle $T_{adapt}$ est diminuée. Si la valeur absolue de l'écart d'horloge |Δ| diminue, alors la durée de l'intervalle $T_{adapt}$ est augmentée. Par exemple si $\Delta_{curr}$ est le dernier écart calculé et $\Delta_{pre}$ est l'écart précédent :

$$T_{adapt} = T_{adapt}(1 - \frac{|\Delta_{curr}| - |\Delta_{pre}|}{|\Delta_{pre}|})$$

Dans l'exemple de la Fig. 4, nous montrons comment la passerelle 11B obtient l'écart d'horloge Δ entre la passerelle 11A et la passerelle 11B. Pour que la passerelle 11A obtienne l'écart d'horloge Δ entre la passerelle 11A et la passerelle 11B il faut qu'elle initie la procédure de synchronisation et donc qu'elle exécute les étapes 400, 401, 402, 407, 408, 409, 410 et 411, la passerelle 11B exécutant les étapes 403, 404, 405 et 406.

Dans un mode de réalisation, chaque passerelle d'un sous-ensemble implémente par l'intermédiaire de son module de traitement, un module logiciel (i.e. une application) spécifique pour chaque autre passerelle dudit sous-ensemble avec laquelle elle forme une paire. Pour chaque autre passerelle, ce module logiciel gère la réception de la trame montante vide (étape 403), chaque traitement appliqué suite à cette réception (étape 404 et 405) et la transmission (étape 406) de la trame descendante contenant l'information représentative de l'instant de réception de la trame montante vide auquel a été ajoutée la durée D.

Comme nous l'avons vu plus haut, l'invention s'appuie sur une utilisation de sous-ensembles de passerelles. Chaque sous-ensemble de passerelles comprend des passerelles capables de relayer vers un terminal une réponse à un message contenu dans une trame montante, transmise par ledit terminal, reçue par n'importe quelle autre passerelle dudit sous-ensemble.

Dans un mode de réalisation, les sous-ensembles sont obtenus lors d'une configuration du réseau LoRa 1 par un opérateur. Lors de cette configuration, l'opérateur définit les sous-ensembles. Par exemple, l'opérateur forme des sous-ensembles à partir de passerelles dont il sait qu'elles pourront se suppléer entre elles pour relayer dans une trame descendante une réponse à un message reçu dans une trame montante par l'une d'entre elles. Pour cela, l'opérateur peut se baser sur une position géographique de chaque passerelle. Ainsi, un sous-ensemble associé à une première passerelle peut être formé à partir de passerelles situées dans un rayon de $R$ de la première passerelle (par exemple $R$ = 10 kilomètres). Dans ce mode de réalisation on part du principe qu'un terminal qui est capable de transmettre une trame montante à la première passerelle est capable de recevoir une trame descendante d'une seconde passerelle située dans un rayon de $R$ kilomètres autour de la première passerelle.

Ce premier mode de réalisation, outre le fait qu'il soit fastidieux à mettre en œuvre si le réseau LoRa comprend un grand nombre de passerelles et de terminaux, n'est pas adaptatif. Il ne prend en effet pas en compte un éventuel dysfonctionnement d'une passerelle ou un changement d'environnement d'une passerelle (par exemple une construction d'un bâtiment au voisinage d'une deuxième passerelle qui empêcherait des communications entre la première et la deuxième passerelles ou entre la deuxième passerelle et le terminal ayant transmis la trame montante). De plus, chaque insertion d'une nouvelle passerelle dans le réseau LoRa 1 nécessite une intervention de l'opérateur pour modifier les caractéristiques d'au moins certains sous-ensembles. Ce mode de réalisation peut toutefois être utilisé au démarrage du réseau LoRa 1 lorsque le serveur 10 n'a aucune information sur les passerelles réellement associées à chaque terminal.

Les **Fig. 5A** et **5B** illustrent schématiquement un premier exemple et un deuxième exemple de procédure adaptative de formation de sous-ensembles de passerelles selon l'invention.

Chaque procédure adaptative de formation de sous-ensembles de passerelles est exécutée périodiquement avec une période $P$ par le serveur 10 ou par un serveur distant du nuage sous le contrôle du serveur 10. $P$ est par exemple une période de deux heures.

Le premier et le deuxième exemples de procédure adaptative de formation de sous-ensembles de passerelles sont adaptés à des contextes différents.

Le contexte de l'exemple de la Fig. 5A est celui d'un réseau LoRa dans lequel, les passerelles du réseau LoRa pouvant émettre sur les mêmes canaux, lesdites passerelles peuvent transmettre des trames descendantes vers et recevoir des trames montantes de chaque terminal du réseau LoRa qui est à leur portée.

Le contexte de l'exemple de la Fig. 5B est celui d'un réseau LoRa dans lequel les passerelles du réseau LoRa ne peuvent pas recevoir des trames montantes de chaque terminal du réseau LoRa qui est à leur portée. Dans ce contexte, on considère que les passerelles utilisent un canal de réception dynamique qui parcourt toute la bande de fréquence allouée à LoRa de manière à pouvoir recevoir des terminaux qu'elles ne pourraient pas recevoir sinon.

Pour l'exécution de ces procédures de formation des sous-ensembles de passerelles, le serveur 10 (ou un serveur distant du nuage sous le contrôle du serveur 10) utilise des informations sur les requêtes qu'il reçoit des passerelles du réseau LoRa 1 ou qu'il envoie vers les passerelles du réseau LoRa 1. Ces informations comprennent pour chaque requête :

• heure d'émission ou de réception de la requête ;
• type de la requête : montante ou descendante ;

- identifiant du terminal concerné par la requête ;
- identifiant de la passerelle concernée par la requête.

Par la suite, nous décrivons les procédures adaptatives de formation de sous-ensembles de passerelles lorsqu'elles sont exécutées par le module de traitement 100 du serveur 10. Ces procédures pourraient tout aussi bien être exécutées par un module de traitement équivalent d'un serveur distant du nuage qui fournirait ensuite un résultat d'exécution des procédures au serveur 10.

On suppose par la suite que le réseau LoRa 1 comprend $N_p$ passerelles.

En référence à la **Fig. 5A,** dans une étape 501, le module de traitement 100 classe les passerelles du réseau LoRa 1 par ordre décroissant d'un nombre de trames descendantes que chaque passerelle a émises vers les terminaux du réseau LoRa 1 pendant la dernière période $P$.

Dans un mode de réalisation, le module de traitement 100 ne classe que les passerelles qui ont émis au moins un nombre prédéterminé $\lambda$ de trames descendantes pendant la dernière période $P$. Dans un mode de réalisation $\lambda = 100$. Les autres passerelles ne sont pas considérées dans la suite de la procédure. Il ne reste alors que $N'_p \leq N_p$ passerelles à considérer, chacune notée $GW_i$ par la suite où $i$ est un indice variant de « 1 » à $N'_p$.

Dans une étape 502, le module de traitement 100 parcourt les passerelles $GW_i$ par ordre croissant de l'indice $i$. Pour chaque passerelle $GW_i$, le module de traitement 100 classe chaque terminal associé avec la passerelle $GW_i$ par ordre décroissant d'un nombre de trames montantes reçues dudit terminal par ladite passerelle $GW_i$ pendant la dernière période $P$. On obtient alors pour la passerelle $GW_i$ un ensemble de terminaux classés $GT_i$ comprenant $M_i$ terminaux associés à la passerelle $GW_i$.

Dans une étape 503, le module de traitement 100 parcourt de nouveau les passerelles $GW_i$ par ordre croissant de l'indice $i$ mais cette fois-ci pour former les sous-ensembles.

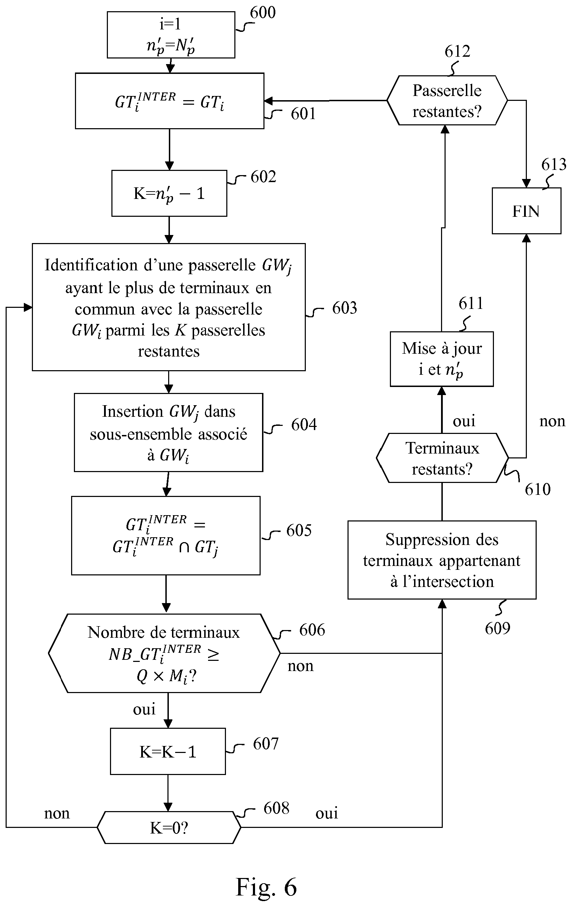

La **Fig. 6** illustre schématiquement en détails la formation des sous-ensembles correspondant à l'étape 503.

Dans une étape 600, le module de traitement 100 initialise une variable $i$ à « 1 ». La variable $i$ permet de parcourir les passerelles $GW_i$. Une passerelle $GW_i$ est une passerelle à partir de laquelle le module de traitement 100 forme un sous-ensemble, la passerelle $GW_i$ appartenant à ce sous-ensemble. Au cours de l'étape 600, le module de traitement initialise en outre une variable $n'_p$ à la valeur du nombre de passerelles à considérer $N'_p$.

Dans une étape 601, le module de traitement 100 initialise un ensemble de terminaux $GT_i^{INTER}$ à l'ensemble de terminaux $GT_i$ associé à la passerelle $GW_i$.

Dans une étape 602, le module de traitement 100 initialise une variable $K$ au nombre de passerelles pouvant être considérées pour former le sous-ensemble à partir de la passerelle $GW_i$. La variable $K$ est donc initialisée à $n'_p$ - 1 car la passerelle $GW_i$ est retirée de l'ensemble des passerelles qui peuvent être considérées car par définition, elle fait partie du sous-ensemble en cours de formation.

Dans une étape 603, le module de traitement 100 identifie parmi les $K$ passerelles restantes, une passerelle $GW_j$ ayant le plus de terminaux en commun avec la passerelle $GW_i$.

Lorsque la passerelle $GW_j$ est trouvée, le module de traitement 100 insère, lors d'une étape 604, la passerelle $GW_j$ dans le sous-ensemble formé à partir de la passerelle $GW_i$. En d'autres termes, le module de traitement ajoute un identifiant de la passerelle $GW_j$ à un ensemble d'identifiants représentant le sous-ensemble formé à partir de la passerelle $GW_i$, ce sous-ensemble comprenant un identifiant de la passerelle $GW_i$.

Dans une étape 605, le module de traitement 100 réinitialise l'ensemble de terminaux $GT_i^{INTER}$ comme l'intersection entre l'ensemble de terminaux $GT_i^{INTER}$ courant et l'ensemble de terminaux $GT_j$ associé à la passerelle $GW_j$ :

$$GT_i^{INTER} = GT_i^{INTER} \cap GT_j$$

Dans une étape 606 le module de traitement 100 vérifie si le nombre de terminaux $NB\_GT_i^{INTER}$ dans l'ensemble de terminaux $GT_i^{INTER}$ est supérieur ou égal à un pourcentage prédéfini $Q$ du nombre $M_i$ de terminaux dans l'ensemble de terminaux $GW_i$. Dans un mode de réalisation $Q=25\%$.

Si $NB\_GT_i^{INTER} \geq Q \times M_i$, le module de traitement 100 continue avec une étape 607. Sinon le module de traitement continue avec une étape 609.

Lors de l'étape 607, le module de traitement décrémente la variable K d'une unité pour passer à une autre passerelle $GW_j$ à insérer dans le sous-ensemble de passerelles formé à partir de la passerelle $GW_i$.

Si lors d'une étape 608 la variable $K$ est égale à zéro, le module de traitement exécute l'étape 609. Sinon, le module de traitement retourne à l'étape 603.

Lors de l'étape 609, le module de traitement 100 supprime les terminaux appartenant à l'ensemble de terminaux $GT_i^{INTER}$ de tous les ensembles de terminaux $GT_i$. De cette manière, un même terminal ne peut pas être associé à plusieurs sous-ensembles.

Lors d'une étape 610, le module de traitement 100 vérifie que suite à la suppression des terminaux appartenant à l'ensemble des terminaux $GT_i^{INTER}$, il reste des terminaux dans au moins deux ensembles $GT_i$. S'il ne reste plus d'ensembles $GT_i$ comprenant des terminaux, cela signifie que tous les terminaux ont été associés à un sous-ensemble. S'il ne reste qu'un ensemble $GT_i$ comprenant des terminaux, cela signifie qu'on ne pourra jamais associer lesdits terminaux à un sous-ensemble. Dans un mode de réalisation, pour ces terminaux qui ne sont pas associés à un sous-ensemble, le comportement d'un réseau LoRa classique s'applique. Dans ces deux cas, s'il ne reste plus d'ensemble $GT_i$ comprenant des terminaux ou s'il ne reste qu'un ensemble $GT_i$ le module de traitement 100 met fin à l'algorithme de la Fig. 6 lors de l'étape 613 et donc à la procédure adaptative de formation de sous-ensembles de passerelles de la Fig. 5A.

Sinon, lors d'une étape 611, le module de traitement 100 met à jour les variables $i$ et $n'_p$. Dans un mode de réalisation, une passerelle peut apparaître dans plusieurs sous-ensembles. Dans ce mode de réalisation, lors de l'étape 610, le module de traitement 100 incrémente la variable $i$ d'une unité pour passer à une autre passerelle $GW_i$ et la variable $n'_p$ reste inchangée.

L'étape 611 est suivie d'une étape 612 au cours de laquelle le module de traitement 100 vérifie si toutes les passerelles à partir desquelles un sous-ensemble peut être formé ont été considérées. Dans le mode de réalisation où une passerelle peut apparaître dans plusieurs sous-ensembles, le module de traitement 100 vérifie si la variable $i$ est inférieure à $Np$. Si c'est le cas, le module de traitement 100 revient à l'étape 601. Sinon, le module de traitement 100 met fin à l'algorithme de la Fig. 6 lors d'une étape 613 et donc à la procédure adaptative de formation de sous-ensembles de passerelles de la Fig. 5A.

On note qu'à la fin de l'algorithme de la Fig. 6, chacune des $N'_p$ passerelles est comprise dans un sous-ensemble, chaque passerelle d'un sous-ensemble étant associée à chaque terminal appartenant à l'intersection $GT_i^{INTER}$ des ensembles de terminaux $GT_i$ associés à chaque passerelle dudit sous-ensemble.

Selon l'algorithme de la Fig. 6, une passerelle peut apparaître dans plusieurs sous-ensembles.

Dans un mode de réalisation, lorsqu'une passerelle $GW_j$ a été insérée dans un sous-ensemble formé à partir d'une passerelle $GW_i$ lors d'une exécution de l'étape 604, cette passerelle $GW_j$ ne peut plus être insérée dans un sous-ensemble formé à partir de toutes autres passerelles. Dans ce mode de réalisation, une passerelle ne peut donc apparaître que dans un seul sous-ensemble. Dans ce mode de réalisation, lors de l'étape 611, la variable $i$ prend une valeur d'un indice d'une passerelle $GW_i$ qui n'appartient pas à un sous-ensemble déjà formé. Par ailleurs la variable $n'_p$ prend une valeur correspondant à un nombre de passerelles comprises dans les $N'_p$ passerelles n'apparaissant dans aucun sous-ensemble déjà formé. Lors de l'étape 612, le module de traitement 100 vérifie s'il reste au moins deux passerelles n'apparaissant dans aucun sous-ensemble déjà formé. S'il ne reste aucune passerelle, cela signifie que toutes les passerelles ont été insérées dans un sous-ensemble. S'il n'existe qu'une passerelle, cela signifie qu'il n'est pas possible de former un sous-ensemble à partir de la passerelle restante puisqu'il faut au moins deux passerelles pour former un sous-ensemble. Dans ces deux cas, le module de traitement 100 met fin à l'algorithme de la Fig. 6 lors de l'étape 613 et donc à la procédure adaptative de formation de sous-ensembles de passerelles de la Fig. 5A.

En référence maintenant à la **Fig. 5B,** dans une étape 511, le module de traitement 100 classe les passerelles du réseau LoRa 1 par ordre décroissant d'un nombre de trames montantes que chaque passerelle a reçues des terminaux du réseau LoRa 1 pendant la dernière période $P$.

De manière similaire à la procédure de la Fig. 5A, dans un mode de réalisation, le module de traitement 100 ne classe que les passerelles qui ont reçu au moins un nombre prédéterminé $\lambda$ de trames montantes pendant la dernière période $P$. Les autres passerelles ne sont pas considérées dans la suite de la procédure. Il ne reste alors que $N''_p \leq N_p$ passerelles à considérer notées $GW_i$ par la suite où $i$ est un indice variant de « 1 » à $N''_p$.

L'étape 511 est suivie d'étapes 512 et 513 strictement identiques aux étapes 502 et 503. Dans un mode de réalisation, chaque requête HTTP montante transmise par une passerelle $GW_i$ contenant un message émis dans une trame montante par un terminal $TERM_k$ ($k$ allant de « 0 » au nombre de terminaux compris dans le réseau LoRa 1) comprend en outre une valeur $q_{i,k}$ représentative d'une qualité de réception de ladite trame montante par ladite passerelle $GW_i$. Pour chaque couple de passerelle $GW_i$ et de terminal $TERM_k$ du réseau LoRa 1 possible, le module de traitement 100 stocke une variable $Q_{i,k}$. La variable $Q_{i,k}$ est initialisée par le module de traitement 100 à une valeur d'un seuil de qualité prédéfini $SQ$ à chaque début d'une période $D$ prédéfinie. Par exemple, la période $D$ est calée sur la période $P$. Dans un autre mode de réalisation, la période $D$ est indépendante de la période $P$ et par exemple égale à « 24 » heures. A chaque réception d'une trame montante de la part d'un terminal $TERM_k$ par une passerelle $GW_i$, le module de traitement 100 récupère la valeur $q_{i,k}$ contenue dans la requête HTTP montante et stocke cette valeur dans la variable $Q_{i,k}$. Dans la variable $Q_{i,k}$, le module de traitement 100 stocke donc une valeur représentative de la qualité de réception de la dernière trame montante reçue par la passerelle $GW_i$ dudit terminal $TERM_k$. Le module de traitement 100 stocke donc des valeurs de qualité de réception $Q_{i,k}$ représentatives de la dernière information de qualité connue pour des couples constitués d'une passerelle $GW_i$ et d'un terminal $TERM_k$.

Dans ce mode de réalisation, lorsqu'au moins une passerelle $GW_i$ relaie dans une requête HTTP montante un message transmis dans une trame montante par un terminal $TERM_k$ qui n'est pas associé à un sous-ensemble, le module de traitement 100 choisit parmi les passerelles $GW_i$ ayant remonté ledit message, une passerelle $GW_i$ dont la qualité de réception $Q_{i,k}$ de ladite trame est supérieure ou égale au seuil de qualité prédéfini $SQ$. Le module de traitement 100 ne peut choisir que parmi les passerelles $GW_i$ ayant reçu la trame montante pour relayer une réponse audit message étant donné que les passerelles $GW_i$ ayant remonté une requête HTTP montante contenant un message en provenance d'un terminal $TERM_k$ qui n'est associé à aucun sous-ensemble ne sont pas censées être synchronisées. Le choix est par exemple fait aléatoirement parmi les passerelles $GW_i$ dont la qualité de réception de ladite trame est supérieure ou égale au seuil de qualité prédéfini $SQ$. Si aucune passerelle $GW_i$ n'a une qualité de réception supérieure ou égale au seuil de qualité prédéfini $SQ$, le module de traitement 100 choisit la passerelle ayant la qualité de réception la plus élevée.

Dans un mode de réalisation, dit mode de réalisation avec compteur, le module de traitement 100 associe un compteur $CPTR_i$ à chaque passerelle $GW_i$ du réseau LoRa 1. Le compteur $CPTR_i$ permet de comptabiliser pour chaque passerelle $GW_i$, un nombre de trames descendantes transmises par ladite passerelle $GW_i$ en réponse à des messages transmis dans des trames montantes par des terminaux $TERM_k$ (*i.e.* le nombre de fois qu'une passerelle $GW_i$ a été choisie pour relayer une réponse à un message transmis dans une trame montante par un terminal $TERM_k$). Dans ce mode de réalisation, chaque compteur $CPTR_i$ est remis à zéro à chaque début de période $D$. Dans ce mode de réalisation, qu'une passerelle $GW_i$ ait été choisie pour relayer une réponse à un message transmis dans une trame montante par un terminal $TERM_k$ qui n'est pas associé à un sous-ensemble ou qui est associé à un sous-ensemble, le compteur $CPTR_i$ associé à ladite passerelle $GW_i$ est incrémenté d'une unité. Le mode de réalisation avec compteur permet de mieux répartir la charge de la transmission des réponses. En effet, une passerelle qui a été peu utilisée pour relayer des réponses à des messages transmis dans des trames montantes par des terminaux $TERM_k$, est privilégiée par rapport à une autre passerelle plus souvent utilisée pour relayer des réponses.

Dans une première variante d'une procédure de choix d'une passerelle devant relayer une réponse à un message émanant d'un terminal adaptée au mode de réalisation avec compteur, lors de l'étape 304, si le sous-ensemble de passerelles $Gw_i$ dans lequel a été déterminée la passerelle 11B (*i.e.* la passerelle LD) comprend une pluralité de passerelles $GW_i$ susceptibles de devenir une passerelle LD pour le compte de la passerelle 11A (*i.e.* de la passerelle LM), le module de traitement 100 détermine la passerelle LD parmi les passerelles $GW_i$ de la pluralité en utilisant les valeurs de compteurs $CPTR_i$ associées à chaque passerelle $GW_i$ de la pluralité. Le module de traitement 100 choisit ainsi la passerelle $GW_i$ associée à la valeur de compteur $CPTR_i$ la plus faible. Lorsque la valeur de compteur la plus faible est partagée par plusieurs passerelles $GW_i$, le module de traitement 100 choisit aléatoirement une passerelle $GW_i$ parmi les passerelles $GW_i$ associées à ladite valeur de compteur. Le compteur $CPTR_i$ de la passerelle $GW_i$ choisie est alors incrémenté d'une unité.

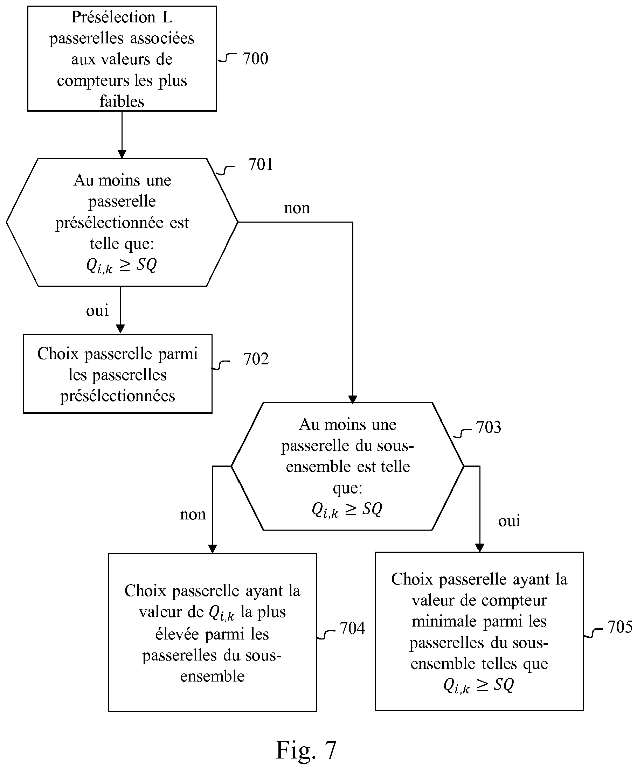

La Fig. 7 illustre schématiquement une deuxième variante d'une procédure de choix d'une passerelle devant relayer une réponse à un message émanant d'un terminal adaptée au mode de réalisation avec compteur. La méthode de choix illustrée en Fig. 7 correspond à une mise en œuvre particulière de l'étape 304.

On suppose là encore que le sous-ensemble de passerelles dans lequel doit être déterminée la passerelle LD comprend une pluralité de passerelles susceptibles de devenir une passerelle LD pour le compte de la passerelle LM.

Dans une étape 700, le module de traitement 100 présélectionne un nombre $L$ de passerelles $GW_i$. Les $L$ passerelles $GW_i$ présélectionnées sont $L$ passerelles $GW_i$ dudit sous-ensemble associées aux valeurs de compteurs $CPTR_i$ les plus faibles. Dans un mode de réalisation, $L=5$.

Dans une étape 701, le module de traitement 100 vérifie si au moins une des $L$ passerelles $GW_i$ présélectionnées est associée à une valeur de qualité de réception $Q_{i,k}$ pour une trame montante émise par le terminal 12 (qui joue alors le rôle de terminal $TERM_k$ ayant émis la trame montante) supérieure ou égale au seuil de qualité prédéfini $SQ$.

Si une seule passerelle $GW_i$ présélectionnée est associée à une valeur de qualité de réception $Q_{i,k}$ supérieure ou égale au seuil de qualité prédéfini $SQ$, lors d'une étape 702, le module de traitement 100 choisit cette passerelle pour relayer une réponse au message contenu dans la trame montante émise par le terminal 12.

Si plusieurs passerelles $GW_i$ présélectionnées sont associées à une valeur de qualité de réception $Q_{i,k}$ supérieure ou égale au seuil de qualité prédéfini $SQ$, lors de l'étape 702, le module de traitement 100 choisit aléatoirement une de ces passerelles $GW_i$ pour relayer une réponse au message contenu dans la trame montante émise par le terminal 12.

Lors de l'étape 702, le module de traitement 100 incrémente d'une unité la valeur du compteur $CPTR_i$ de la passerelle $GW_i$ choisie.

Si chaque passerelle $GW_i$ présélectionnée est associée à une valeur de qualité de réception $Q_{i,k}$ inférieure au seuil de qualité prédéfini $SQ$, le module de traitement 100 passe à une étape 703.

Lors de l'étape 703, le module de traitement 100 détermine si au moins une passerelle du sous-ensemble est associée à une valeur de qualité de réception

$Q_{i,k}$ supérieure ou égale au seuil de qualité prédéfini $SQ$. Si c'est le cas, le module de traitement 100 passe à une étape 705.

Lors de l'étape 705, le module de traitement 100 choisit parmi les passerelles $GW_i$ du sous-ensemble, la passerelle $GW_i$ associée à une valeur de qualité de réception $Q_{i,k}$ supérieure ou égale au seuil de qualité prédéfini $SQ$ ayant la valeur de compteur $CPTR_i$ la plus faible. Si la valeur de compteur $CPTR_i$ la plus faible est partagée par plusieurs passerelles $GW_i$, le module de traitement 100 choisit aléatoirement une passerelle $GW_i$ parmi ces passerelles. Lors de l'étape 705, le module de traitement 100 incrémente d'une unité la valeur du compteur $CPTR_i$ de la passerelle $GW_i$ choisie.

Si chaque passerelle du sous-ensemble est associée à une valeur de qualité de réception $Q_{i,k}$ inférieure au seuil de qualité prédéfini $SQ$, le module de traitement 100 exécute une étape 704. Lors de l'étape 704, le module de traitement 100 choisit la passerelle $GW_i$ associée à la valeur $Q_{i,k}$ la plus élevée parmi les passerelles du sous-ensemble. Si la valeur $Q_{i,k}$ la plus élevée est partagée par plusieurs passerelles $GW_i$, le module de traitement 100 choisit aléatoirement une passerelle $GW_i$ parmi ces passerelles. Lors de l'étape 704, le module de traitement 100 incrémente d'une unité la valeur du compteur $CPTR_i$ de la passerelle $GW_i$ choisie.

## Revendications

1. Procédé de communication, exécuté dans un réseau sans fil à grande portée et permettant une faible consommation d'énergie dans lequel des terminaux communiquent avec un serveur (10) par l'intermédiaire de passerelles (11A, 11B) d'un ensemble de passerelles selon une technologie de communication impliquant que lorsque le serveur reçoit un message d'un terminal via une première passerelle, il fixe un instant auquel une passerelle doit relayer une réponse audit message en fonction d'un instant de réception dudit message par ladite première passerelle, chaque passerelle étant associée avec un ensemble de terminaux comprenant au moins un terminal utilisant ladite passerelle pour communiquer avec le serveur, le procédé mis en œuvre par le serveur comprenant :

    recevoir (303) une requête en provenance d'une première passerelle (11A) contenant un message émis dans une trame, dite trame montante, par un terminal (12), dit terminal émetteur ; déterminer (304) une seconde passerelle (11B) différente de la première passerelle à utiliser pour relayer une réponse audit message destinée au terminal émetteur, la seconde passerelle étant déterminée dans un sous-ensemble de passerelles de l'ensemble de passerelles comprenant la première passerelle et au moins une seconde passerelle, chaque passerelle du sous-ensemble étant capable de relayer vers un terminal une réponse à un message transmis dans une trame montante par ledit terminal reçue par n'importe quelle autre passerelle dudit sous-ensemble, les passerelles du sous-ensemble ayant au moins un terminal associé en commun et étant associées avec le terminal émetteur, la seconde passerelle étant déterminée en exécutant une procédure de choix comprenant :

    présélectionner (700) un nombre prédéfini de passerelles associées aux valeurs de compteurs les plus faibles parmi des valeurs de compteurs associées aux passerelles dudit sous-ensemble représentatives d'un nombre de trames descendantes transmises par les passerelles dudit sous-ensemble en réponse à des messages transmis dans des trames montantes par des terminaux ; choisir (701, 702) une passerelle associée à une valeur représentative d'une qualité de communication avec le terminal émetteur supérieure ou égale à un seuil de qualité prédéfini parmi les passerelles du nombre prédéfini de passerelles présélectionnées, la passerelle choisie devenant la seconde passerelle; transmettre (305) une requête contenant ladite réponse à la seconde passerelle, ladite réponse étant retransmise (307) par la seconde passerelle audit terminal émetteur dans une trame, dite trame descendante, à un instant indiqué dans la requête, ledit instant étant indiqué dans une référence temporelle de la première passerelle, la deuxième passerelle prenant en compte un écart d'horloge entre la première et la seconde passerelles pour transmettre la trame descendante audit instant.

2. Procédé selon la revendication 1, **caractérisé en ce que** la technologie de communication est la technologie LoRa et chaque trame échangée entre une passerelle et un terminal est conforme au protocole LoRaWAN.

3. Procédé selon la revendication 1 ou 2, **caractérisé en ce que** l'ensemble de passerelles comprend une pluralité de sous-ensembles de passerelles, chaque sous-ensemble étant formé par un opérateur à partir de passerelles pouvant se suppléer entre elles pour relayer une réponse dans une trame descendante à un message reçu dans une trame montante par l'une d'entre elles ou par une procédure adaptative de formation des sous-ensembles exécutée périodiquement sous le contrôle du serveur avec une période prédéfinie.

**4.** Procédé selon la revendication 3, **caractérisé en ce que** le serveur transmet à chaque passerelle comprise dans un sous-ensemble des caractéristiques dudit sous-ensemble comprenant un identifiant pour chaque passerelle comprise dans ledit sous-ensemble et un identifiant pour chaque terminal associé en commun entre les passerelles du sous-ensemble.

**5.** Procédé selon la revendication 3 ou 4, **caractérisé en ce que** la procédure adaptative de formation des sous-ensembles comprend :

classer (501) les passerelles de l'ensemble de passerelles par ordre décroissant d'un nombre de trames descendantes que chaque passerelle a émises pendant la dernière période prédéfinie ou par ordre décroissant d'un nombre de trames montantes que chaque passerelle a reçues pendant la dernière période prédéfinie ;
parcourir (502) les passerelles ainsi classées dans leur ordre de classement et pour chaque passerelle, classer chaque terminal associé avec ladite passerelle par ordre décroissant d'un nombre de trames montantes reçues dudit terminal par ladite passerelle pendant la dernière période prédéfinie ;
parcourir (503) les passerelles dans leur ordre de classement et pour chaque passerelle, définir un sous-ensemble de passerelles à partir de ladite passerelle, ladite passerelle, dite passerelle de base, appartenant audit sous-ensemble, la définition du sous-ensemble comprenant :
tant qu'un nombre de terminaux dans un premier ensemble de terminaux associés au sous-ensemble de passerelles en cours de définition est supérieur à un pourcentage prédéfini d'un nombre de terminaux d'un deuxième ensemble de terminaux associés à la passerelle de base (606) :

identifier (603) parmi les passerelles ainsi classées n'ayant pas encore été insérées dans le sous-ensemble, une passerelle ayant le plus de terminaux en commun avec la passerelle de base ;
insérer (604) la passerelle ainsi identifiée dans le sous-ensemble ; et,
former (605) le premier ensemble de terminaux comme une intersection entre le deuxième ensemble de terminaux et chaque ensemble de terminaux associé avec une passerelle insérée dans le sous-ensemble ;

et, supprimer chaque terminal compris dans le premier ensemble de terminaux des ensembles de terminaux associé aux passerelles ainsi classées.

**6.** Procédé selon la revendication 5, **caractérisé en ce que**, lorsque les passerelles sont classées par ordre décroissant du nombre de trames descendantes que chaque passerelle a émises pendant la dernière période prédéfinie, seules les passerelles qui ont émis au moins un nombre prédéterminé de trames descendantes pendant la dernière période prédéfinie sont classées, et lorsque les passerelles sont classées par ordre décroissant du nombre de trames montantes que chaque passerelle a reçues pendant la dernière période prédéfinie, seules les passerelles qui ont reçu au moins un nombre prédéterminé de trames montantes pendant la dernière période prédéfinie sont classées.

**7.** Procédé selon la revendication 5 ou 6, **caractérisé en ce que** lorsqu'une passerelle a été insérée dans un sous-ensemble formé à partir d'une passerelle de base, cette passerelle ne peut plus être insérée dans un sous-ensemble formé à partir de toutes autres passerelles de base.

**8.** Procédé selon la revendication 5, 6 ou 7, **caractérisé en ce que** la procédure adaptative de formation des sous-ensembles s'arrête lorsque toutes les passerelles classées ont été insérées dans un sous-ensemble ou lorsque tous les terminaux du réseau sont compris dans un ensemble de terminaux associé à un sous-ensemble.

**9.** Procédé selon l'une quelconque des revendications précédentes, **caractérisé en ce que** l'écart d'horloge existant entre deux passerelles est déterminé par une procédure de synchronisation, la procédure de synchronisation étant exécutée par l'une des deux passerelles, dite passerelle initiatrice, en collaboration avec l'autre passerelle, dite passerelle collaboratrice et comprenant :

transmettre (400) une trame montante à destination de la passerelle collaboratrice, la passerelle initiatrice se mettant en attente (401) pendant une période prédéterminée avant de se mettre en écoute d'une réponse (402) à ladite trame montante, ladite réponse étant transmise (406) dans une trame descendante par la passerelle collaboratrice après une période égale à la période prédéterminée suivant une réception (403) de ladite trame par la passerelle collaboratrice, une première information représentative d'un instant de réception de ladite requête par la passerelle collaboratrice à laquelle a été ajoutée la durée de la période prédéterminée étant insérée dans ladite réponse par la passerelle collaboratrice ;

recevoir (407) ladite réponse et obtenir (408) une deuxième information représentative d'un instant de réception de ladite réponse par la seconde passerelle ; et,

calculer (409) l'écart d'horloge entre la passerelle initiatrice et la passerelle collaboratrice comme une différence entre la deuxième et la première informations.

10. Procédé selon la revendication 9, **caractérisé en ce que** la procédure de synchronisation est exécutée dans chaque sous-ensemble pour chaque paire de passerelles possibles dudit sous-ensemble, chaque passerelle d'une paire de passerelles étant alternativement initiatrice ou collaboratrice, à intervalles réguliers prédéfinis ou intervalles adaptatifs de durées dépendantes d'une évolution des écarts d'horloge au cours du temps.

11. Procédé selon l'une quelconque des revendications précédentes, **caractérisé en ce que** la seconde passerelle est déterminée aléatoirement dans le sous-ensemble de passerelles comprenant la première passerelle ou,

aléatoirement parmi un nombre prédéfini de passerelles dudit sous-ensemble offrant une qualité de communication avec le terminal émetteur la plus élevée parmi les passerelles dudit sous-ensemble.

12. Procédé selon la revendication 1, **caractérisé en ce que**, lorsqu'aucune passerelle du nombre prédéfini de passerelles n'est associée à une valeur représentative d'une qualité de communication avec le terminal émetteur supérieure ou égale au seuil de qualité prédéfini, choisir une passerelle du sous-ensemble associée à la valeur de compteur la plus faible parmi les valeurs de compteur associées aux passerelles dudit sous-ensemble et associées à une valeur représentative d'une qualité de communication avec le terminal émetteur supérieure ou égale au seuil de qualité prédéfini ; et,

si aucune passerelle dudit sous-ensemble n'est associée à une valeur représentative d'une qualité de communication avec le terminal émetteur supérieure ou égale au seuil de qualité prédéfini, choisir une passerelle associée à la valeur représentative d'une qualité de communication avec le terminal émetteur maximum parmi les valeurs représentatives d'une qualité de communication avec le terminal émetteur associées aux passerelles dudit sous-ensemble.

13. Procédé selon la revendication 1 **caractérisé en ce que**, lorsque le serveur reçoit une pluralité de requêtes contenant chacune un même message émis dans une trame montante par un terminal émetteur associé à aucun sous-ensemble, le procédé comprend :

choisir parmi les premières passerelles ayant remonté ledit message vers le serveur, une passerelle dont une qualité de réception de ladite trame est supérieure ou égale à un seuil de qualité prédéfini ; et,

transmettre une requête contenant ladite réponse à la passerelle choisie, ladite réponse étant retransmise par la passerelle choisie audit terminal émetteur dans une trame descendante.

14. Dispositif de type serveur (10) compris dans un réseau sans fil à grande portée et permettant une faible consommation d'énergie dans lequel des terminaux communiquent avec le serveur par l'intermédiaire de passerelles (11A, 11B) d'un ensemble de passerelles selon une technologie de communication impliquant que lorsque le serveur reçoit un message d'un terminal via une première passerelle, il fixe un instant auquel une passerelle doit relayer une réponse audit message en fonction d'un instant de réception dudit message par ladite première passerelle, chaque passerelle étant associée avec un ensemble de terminaux comprenant au moins un terminal utilisant ladite passerelle pour communiquer avec le serveur, le dispositif comprenant :

des moyens de réception pour recevoir (303) une requête en provenance d'une première passerelle (11A) contenant un message émis dans une trame, dite trame montante, par une terminal (12), dit terminal émetteur ;

des moyens de détermination pour déterminer (304) une seconde passerelle (11B) différente de la première passerelle à utiliser pour relayer une réponse audit message destinée au terminal émetteur, la seconde passerelle étant déterminée dans un sous-ensemble de passerelles de l'ensemble de passerelles comprenant la première passerelle et au moins une seconde passerelle, chaque passerelle du sous-ensemble étant capable de relayer vers un terminal une réponse à un message transmis dans une trame montante par ledit terminal reçue par n'importe quelle autre passerelle dudit sous-ensemble, les passerelles du sous-ensemble ayant au moins un terminal associé en commun et étant associées avec le terminal émetteur, les moyens de détermination exécutant une procédure de choix pour déterminer la seconde passerelle comprenant :

présélectionner (700) un nombre prédéfini de passerelles associées aux valeurs de compteurs les plus faibles parmi des valeurs de compteurs associées aux passerelles dudit sous-ensemble représentative d'un nombre de trames descendantes transmises par les passerelles dudit sous-ensemble en réponse à des messages transmis dans des trames montantes par des terminaux ;

choisir (701, 702) une passerelle associée à une valeur représentative d'une qualité de communication avec le terminal émetteur supérieure ou égale à un seuil de qualité prédéfini parmi les passerelles du nombre prédéfini de passerelles présélectionnées, la passerelle choisie devenant la seconde passerelle ;

des moyens de transmission pour transmettre (305) une requête contenant ladite réponse à la seconde passerelle, ladite réponse étant retransmise (307) par la seconde passerelle au terminal émetteur dans une trame dite trame descendante à un instant indiqué dans la requête, ledit instant étant indiqué dans une référence temporelle de la première passerelle, la deuxième passerelle prenant en compte un écart d'horloge entre la première et la seconde passerelles pour transmettre la trame descendante audit instant.

15. Système compris dans un réseau sans fil à grande portée et permettant une faible consommation d'énergie comprenant un dispositif de type serveur selon la revendication 14, une pluralité de terminaux et une pluralité de passerelles, la pluralité de passerelles comprenant des sous-ensembles de passerelles, chaque passerelle du sous-ensemble étant capable de relayer vers un terminal une réponse à un message transmis dans une trame montante par ledit terminal reçue par n'importe quelle autre passerelle dudit sous-ensemble, les passerelles du sous-ensemble ayant au moins un terminal associé en commun.

16. Programme d'ordinateur, **caractérisé en ce qu'**il comprend des instructions pour mettre en œuvre, par un dispositif (100), toutes les étapes du procédé selon l'une quelconque des revendications 1 à 13, lorsque ledit programme est exécuté par un processeur dudit dispositif (100).

17. Moyens de stockage, **caractérisés en ce qu'**ils stockent un programme d'ordinateur comprenant des instructions pour mettre en œuvre, par un dispositif (100), toutes les étapes du procédé selon l'une quelconque des revendications 1 à 13, lorsque ledit programme est exécuté par un processeur dudit dispositif (100).

**Patentansprüche**

1. Kommunikationsverfahren, das in einem drahtlosen Netzwerk mit großer Reichweite ausgeführt wird und einen geringen Energieverbrauch ermöglicht, wobei Endgeräte mittels Gateways (11A, 11B) eines Satzes von Gateways gemäß einer Kommunikationstechnologie mit einem Server (10) kommunizieren, was bedeutet, dass der Server, wenn er über ein erstes Gateway eine Nachricht von einem Endgerät empfängt, in Abhängigkeit eines Empfangszeitpunkts der Nachricht von dem ersten Gateway einen Zeitpunkt festlegt, zu dem ein Gateway eine Antwort auf die Nachricht weiterleiten soll, wobei jedes Gateway einem Satz von Endgeräten zugeordnet ist, der mindestens ein Endgerät umfasst, welches das Gateway zum Kommunizieren mit dem Server nutzt, wobei das Verfahren, das von dem Server durchgeführt wird, Folgendes umfasst:

Empfangen (303) einer Anfrage von einem ersten Gateway (11A), die eine Nachricht enthält, die in einem Rahmen, der als Uplink-Rahmen bezeichnet wird, von einem Endgerät (12) gesendet wird, das als sendendes Endgerät bezeichnet wird;

Bestimmen (304) eines zweiten Gateways (11B), das sich von dem ersten Gateway unterscheidet, zur Verwendung für das Weiterleiten einer Antwort auf die Nachricht, die für das sendende Endgerät bestimmt ist, wobei das zweite Gateway aus einem Teilsatz von Gateways des Satzes von Gateways bestimmt wird, der das erste Gateway und mindestens ein zweites Gateway umfasst, wobei jedes Gateway des Teilsatzes in der Lage ist, eine Antwort auf eine Nachricht, die von einem Endgerät in einem Uplink-Rahmen übertragen wird, der von irgendeinem anderen Gateway des Teilsatzes empfangen wird, an das Endgerät weiterzuleiten, wobei die Gateways des Teilsatzes mindestens ein gemeinsam zugeordnetes Endgerät aufweisen und dem sendenden Endgerät zugeordnet sind, wobei das zweite Gateway durch Ausführen eines Auswahlverfahrens bestimmt wird, das Folgendes umfasst:

Vorauswählen (700) einer vordefinierten Anzahl von Gateways, die den niedrigsten Zählerwerten aus Zählerwerten zugeordnet sind, die den Gateways des Teilsatzes zugeordnet sind, die repräsentativ für eine Anzahl von Downlink-Rahmen sind, die von den Gateways des Teilsatzes in Reaktion auf Nachrichten übertragen werden, die von Endgeräten in Uplink-Rahmen übertragen werden;

Auswählen (701, 702) eines Gateways, das einem Wert zugeordnet ist, der repräsentativ für eine Qualität der Kommunikation mit dem sendenden Endgerät ist, die größer oder gleich einem vordefinierten Qualitätsschwellenwert ist, aus den Gateways der vordefinierten Anzahl von vorausgewählten Gateways, wobei das ausgewählte Gateway das zweite Gateway wird;

Übertragen (305) einer Anfrage, welche die Antwort enthält, an das zweite Gateway, wobei die Antwort zu einem Zeitpunkt, der in der Anfrage angegeben ist, in einem Rahmen, der als Downlink-Rahmen bezeichnet wird, von dem zweiten Gateway an das sendende Endgerät übertragen (307) wird, wobei der Zeitpunkt in einer Zeitreferenz des ersten Gateways angegeben ist, wobei das zweite Gateway zur Übertragung des Downlink-Rahmens zu dem Zeitpunkt eine Taktverschiebung zwischen dem ersten und dem zweiten Gateway berücksichtigt.

2. Verfahren nach Anspruch 1, **dadurch gekennzeichnet, dass** die Kommunikationstechnologie die LoRa-Technologie ist und jeder Rahmen, der zwischen einem Gateway und einem Endgerät ausgetauscht wird, dem LoRaWAN-Protokoll entspricht.

3. Verfahren nach Anspruch 1 oder 2, **dadurch gekennzeichnet, dass** der Satz von Gateways mehrere Teilsätze von Gateways umfasst, wobei jeder Teilsatz von einem Bediener aus Gateways, die sich zum Weiterleiten einer Antwort in einem Downlink-Rahmen auf eine Nachricht, die in einem Uplink-Rahmen von einem von ihnen empfangen wird, untereinander ersetzen können, oder durch ein adaptives Verfahren zur Bildung von Teilsätzen gebildet wird, das periodisch mit einer vordefinierten Periode unter der Steuerung des Servers ausgeführt wird.

4. Verfahren nach Anspruch 3, **dadurch gekennzeichnet, dass** der Server an jedes Gateway, das in einem Teilsatz umfasst ist, Merkmale des Teilsatzes überträgt, die eine Kennung für jedes Gateway, das in dem Teilsatz umfasst ist, und eine Kennung für jedes Endgerät umfassen, das den Gateways des Teilsatzes gemeinsam zugeordnet ist.

5. Verfahren nach Anspruch 3 oder 4, **dadurch gekennzeichnet, dass** das adaptive Verfahren zur Bildung von Teilsätzen Folgendes umfasst:

Ordnen (501) der Gateways des Satzes von Gateways in absteigender Reihenfolge einer Anzahl von Downlink-Rahmen, die jedes Gateway während der letzten vordefinierten Periode gesendet hat, oder in absteigender Reihenfolge einer Anzahl von Uplink-Rahmen, die jedes Gateway während der letzten vordefinierten Periode empfangen hat;

Durchgehen (502) der so geordneten Gateways in ihrer Rangfolge und für jedes Gateway, Ordnen jedes Endgeräts, das dem Gateway zugeordnet ist, in absteigender Reihenfolge einer Anzahl von Uplink-Rahmen, die von dem Gateway während der letzten vordefinierten Periode von dem Endgerät empfangen wurden;

Durchgehen (503) der Gateways in ihrer Rangfolge und für jedes Gateway, Definieren eines Teilsatzes von Gateways ab dem Gateway, wobei das Gateway, das als Basis-Gateway bezeichnet wird, zu dem Teilsatz gehört, wobei das Definieren des Teilsatzes Folgendes umfasst: solange eine Anzahl von Endgeräten in einem ersten Satz von Endgeräten, die dem Teilsatz von Gateways, der definiert wird, zugeordnet sind, größer ist als ein vordefinierter prozentualer Anteil einer Anzahl von Endgeräten eines zweiten Satzes von Endgeräten, die dem Basis-Gateway zugeordnet sind (606):

Identifizieren (603), aus den so geordneten Gateways, die noch nicht in den Teilsatz aufgenommen wurden, eines Gateways, das die meisten Endgeräte mit dem Basis-Gateway gemeinsam hat;

Aufnehmen (604) des so identifizierten Gateways in den Teilsatz; und

Bilden (605) des ersten Satzes von Endgeräten als eine Schnittmenge zwischen dem zweiten Satz von Endgeräten und jedem Satz von Endgeräten, der einem Gateway zugeordnet ist, das in den Teilsatz aufgenommen ist;

und Löschen jedes Endgeräts, das in dem ersten Satz von Endgeräten umfasst ist, aus den Sätzen von Endgeräten, die den so geordneten Gateways zugeordnet sind.

6. Verfahren nach Anspruch 5, **dadurch gekennzeichnet, dass**, wenn die Gateways in absteigender Reihenfolge der Anzahl von Downlink-Rahmen geordnet werden, die jedes Gateway während der letzten vordefinierten Periode gesendet hat, nur die Gateways geordnet werden, die während der letzten vordefinierten Periode mindestens eine vorbestimmte Anzahl von Downlink-Rahmen gesendet haben, und wenn die Gateways in absteigender Reihenfolge der Anzahl von Uplink-Rahmen geordnet werden, die jedes Gateway während der letzten vordefinierten Periode empfangen hat, nur die Gateways geordnet werden, die während der letzten vordefinierten Periode mindestens eine vorbestimmte Anzahl von Uplink-Rahmen empfangen haben.

**7.** Verfahren nach Anspruch 5 oder 6, **dadurch gekennzeichnet, dass**, wenn ein Gateway in einen ab einem Basis-Gateway gebildeten Teilsatz aufgenommen wurde, dieses Gateway nicht mehr in einen ab allen anderen Basis-Gateways gebildeten Teilsatz aufgenommen werden kann.

**8.** Verfahren nach Anspruch 5, 6 oder 7, **dadurch gekennzeichnet, dass** das adaptive Verfahren zur Bildung von Teilsätzen endet, wenn alle geordneten Gateways in einen Teilsatz aufgenommen wurden oder wenn alle Endgeräte des Netzwerks in einem Satz von Endgeräten umfasst sind, der einem Teilsatz zugeordnet ist.

**9.** Verfahren nach einem der vorhergehenden Ansprüche, **dadurch gekennzeichnet, dass** die Taktverschiebung, die zwischen zwei Gateways besteht, durch ein Synchronisationsverfahren bestimmt wird, wobei das Synchronisationsverfahren von einem der zwei Gateways, das als initiierendes Gateway bezeichnet wird, in Zusammenwirkung mit dem anderen Gateway ausgeführt wird, das als zusammenwirkendes Gateway bezeichnet wird, und Folgendes umfasst:

Übertragen (400) eines Uplink-Rahmens an das zusammenwirkende Gateway, wobei das initiierende Gateway sich während einer vorbestimmten Periode in eine Warteschlange einreiht (401), bevor es nach einer Antwort auf den Uplink-Rahmen lauscht (402), wobei die Antwort nach einem Empfang (403) des Rahmens von dem zusammenwirkenden Gateway, nach einer Periode, die gleich der vorbestimmten Periode ist, von dem zusammenwirkenden Gateway in einem Downlink-Rahmen übertragen wird (406), wobei eine erste Information, die repräsentativ für einen Empfangszeitpunkt der Anfrage von dem zusammenwirkenden Gateway ist, an welche die Dauer der vorbestimmten Periode angefügt wurde, von dem zusammenwirkenden Gateway in die Antwort aufgenommen wird;
Empfangen (407) der Antwort und Erhalten (408) einer zweiten Information, die repräsentativ für einen Empfangszeitpunkt der Antwort von dem zweiten Gateway ist;
und
Berechnen (409) der Taktverschiebung zwischen dem initiierenden Gateway und dem zusammenwirkenden Gateway als eine Differenz zwischen der zweiten und der ersten Information.

**10.** Verfahren nach Anspruch 9, **dadurch gekennzeichnet, dass** das Synchronisationsverfahren in jedem Teilsatz für jedes Paar von möglichen Gateways des Teilsatzes ausgeführt wird, wobei jedes Gateway eines Paars von Gateways abwechselnd, in regelmäßigen vordefinierten Zeitabständen oder adaptiven Zeitabständen mit einer Dauer, die von einer Entwicklung der Taktverschiebungen im Laufe der Zeit abhängt, initiierend oder zusammenwirkend ist.

**11.** Verfahren nach einem der vorhergehenden Ansprüche, **dadurch gekennzeichnet, dass** das zweite Gateway zufällig aus dem Teilsatz von Gateways bestimmt wird, der das erste Gateway umfasst, oder zufällig aus einer vordefinierten Anzahl von Gateways des Teilsatzes bestimmt wird, die aus den Gateways des Teilsatzes eine höchste Kommunikationsqualität mit dem sendenden Endgerät bieten.

**12.** Verfahren nach Anspruch 1, **gekennzeichnet durch** das Auswählen, wenn kein Gateway der vordefinierten Anzahl von Gateways einem Wert zugeordnet ist, der repräsentativ für eine Qualität der Kommunikation mit dem sendenden Endgerät ist, die größer oder gleich dem vordefinierten Qualitätsschwellenwert ist, eines Gateways des Teilsatzes, das dem niedrigsten Zählerwert aus den Zählerwerten zugeordnet ist, die den Gateways des Teilsatzes zugeordnet sind und die einem Wert zugeordnet sind, der repräsentativ für eine Qualität der Kommunikation mit dem sendenden Endgerät ist, die größer oder gleich dem vordefinierten Qualitätsschwellenwert ist; und
wenn kein Gateway des Teilsatzes einem Wert zugeordnet ist, der repräsentativ für eine Qualität der Kommunikation mit dem sendenden Endgerät ist, die größer oder gleich dem vordefinierten Qualitätsschwellenwert ist, Auswählen eines Gateways, das dem Wert zugeordnet ist, der repräsentativ für eine maximale Qualität der Kommunikation mit dem sendenden Endgerät ist, aus den Werten, die repräsentativ für eine Qualität der Kommunikation mit dem sendenden Endgerät sind, die den Gateways des Teilsatzes zugeordnet sind.

**13.** Verfahren nach Anspruch 1, **dadurch gekennzeichnet, dass**, wenn der Server mehrere Anfragen erhält, die jeweils eine gleiche Nachricht enthalten, die von einem sendenden Endgerät, das keinem Teilsatz zugeordnet ist, in einem Uplink-Rahmen gesendet wird, das Verfahren Folgendes umfasst:

Auswählen, aus den ersten Gateways, welche die Nachricht an den Server weitergeleitet haben, eines ersten Gateways, dessen Empfangsqualität des Rahmens größer oder gleich einem vordefinierten Qualitätsschwellenwert ist; und
Übertragen einer Anfrage, welche die Antwort enthält, an das ausgewählte Gateway, wobei die Antwort von dem ausgewählten Gateway in einem Downlink-Rahmen an das sendende Endgerät übertragen wird.

14. Servervorrichtung (10), die in einem drahtlosen Netzwerk mit großer Reichweite umfasst ist und einen geringen Energieverbrauch ermöglicht, wobei Endgeräte mittels Gateways (11A, 11B) eines Satzes von Gateways gemäß einer Kommunikationstechnologie mit dem Server kommunizieren, was bedeutet, dass der Server, wenn er über ein erstes Gateway eine Nachricht von einem Endgerät empfängt, in Abhängigkeit eines Empfangszeitpunkts der Nachricht von dem ersten Gateway einen Zeitpunkt festlegt, zu dem ein Gateway eine Antwort auf die Nachricht weiterleiten soll, wobei jedes Gateway einem Satz von Endgeräten zugeordnet ist, der mindestens ein Endgerät umfasst, welches das Gateway zum Kommunizieren mit dem Server nutzt, wobei die Vorrichtung Folgendes umfasst:

Empfangsmittel zum Empfangen (303) einer Anfrage von einem ersten Gateway (11A), die eine Nachricht enthält, die in einem Rahmen, der als Uplink-Rahmen bezeichnet wird, von einem Endgerät (12) gesendet wird, das als sendendes Endgerät bezeichnet wird;
Bestimmungsmittel zum Bestimmen (304) eines zweiten Gateways (11B), das sich von dem ersten Gateway unterscheidet, zur Verwendung für das Weiterleiten einer Antwort auf die Nachricht, die für das sendende Endgerät bestimmt ist, wobei das zweite Gateway aus einem Teilsatz von Gateways des Satzes von Gateways bestimmt wird, der das erste Gateway und mindestens ein zweites Gateway umfasst, wobei jedes Gateway des Teilsatzes in der Lage ist, eine Antwort auf eine Nachricht, die von einem Endgerät in einem Uplink-Rahmen übertragen wird, der von irgendeinem anderen Gateway des Teilsatzes empfangen wird, an das Endgerät weiterzuleiten, wobei die Gateways des Teilsatzes mindestens ein gemeinsam zugeordnetes Endgerät aufweisen und dem sendenden Endgerät zugeordnet sind, wobei die Bestimmungsmittel zum Bestimmen des zweiten Gateways ein Auswahlverfahren ausführen, das Folgendes umfasst:

Vorauswählen (700) einer vordefinierten Anzahl von Gateways, die den niedrigsten Zählerwerten aus Zählerwerten zugeordnet sind, die den Gateways des Teilsatzes zugeordnet sind, die repräsentativ für eine Anzahl von Downlink-Rahmen sind, die von den Gateways des Teilsatzes in Reaktion auf Nachrichten übertragen werden, die von Endgeräten in Uplink-Rahmen übertragen werden;
Auswählen (701, 702) eines Gateways, das einem Wert zugeordnet ist, der repräsentativ für eine Qualität der Kommunikation mit dem sendenden Endgerät ist, die größer oder gleich einem vordefinierten Qualitätsschwellenwert ist, aus den Gateways der vordefinierten Anzahl von vorausgewählten Gateways, wobei das ausgewählte Gateway das zweite Gateway wird;
Übertragungsmittel zum Übertragen (305) einer Anfrage, welche die Antwort enthält, an das zweite Gateway, wobei die Antwort zu einem Zeitpunkt, der in der Anfrage angegeben ist, in einem Rahmen, der als Downlink-Rahmen bezeichnet wird, von dem zweiten Gateway an das sendende Endgerät übertragen (307) wird, wobei der Zeitpunkt in einer Zeitreferenz des ersten Gateways angegeben ist, wobei das zweite Gateway zur Übertragung des Downlink-Rahmens zu dem Zeitpunkt eine Taktverschiebung zwischen dem ersten und dem zweiten Gateway berücksichtigt.

15. System, das in einem drahtlosen Netzwerk mit großer Reichweite umfasst ist und einen niedrigen Energieverbrauch ermöglicht, das eine Servervorrichtung nach Anspruch 14, mehrere Endgeräte und mehrere Gateways umfasst, wobei die mehreren Gateways Teilsätze von Gateways umfassen, wobei jedes Gateway des Teilsatzes in der Lage ist, eine Antwort auf eine Nachricht, die von einem Endgerät in einem Uplink-Rahmen übertragen wird, der von irgendeinem anderen Gateway des Teilsatzes empfangen wird, an das Endgerät weiterzuleiten, wobei die Gateways des Teilsatzes mindestens ein gemeinsam zugeordnetes Endgerät aufweisen.

16. Computerprogramm, **dadurch gekennzeichnet, dass** es Anweisungen zum Durchführen, durch eine Vorrichtung (100), aller Schritte des Verfahrens nach einem der Ansprüche 1 bis 13, wenn das Programm von einem Prozessor der Vorrichtung (100) ausgeführt wird, umfasst.

17. Speichermittel, **dadurch gekennzeichnet, dass** sie ein Computerprogramm speichern, das Anweisungen zum Durchführen, durch eine Vorrichtung (100), aller Schritte des Verfahrens nach einem der Ansprüche 1 bis 13, wenn das Programm von einem Prozessor der Vorrichtung (100) ausgeführt wird, umfasst.

**Claims**

1. Communication method executed in a long-range wireless network and affording low energy consumption wherein terminals communicate with a server (10) by means of gateways (11A, 11b) in a set of gateways according to a communication technology meaning that, when the server receives a message from a terminal via a first gateway, it fixes an instant at which a gateway must relay a response to said message according to an instant of reception of said message by said first gateway, each gateway being associated with a set of terminals comprising at least one terminal using said gateway for communicating with the server, the method implemented by the server comprising :

receiving (303) a request coming from a first gateway (11A) containing a message sent in a frame, referred to as an uplink frame, by a terminal (12), referred to as the sending terminal; determining (304) a second gateway (11B) different from the first gateway to be used for relaying a response to said message intended for the sending terminal, the second gateway being determined in a subset of gateways in the set of gateways comprising the first gateway and at least one second gateway, each gateway in the subset being capable of relaying to a terminal a response to a message transmitted in an uplink frame by said terminal received by any other gateway in said subset, the gateways in the subset having at least one terminal associated in common and being associated with the sending terminal, the second gateway being determined by executing a choice procedure comprising:

preselecting (700) a predefined number of gateways associated with the lowest counter values among the counter values associated with the gateways in said subset representing a number of downlink frames transmitted by the gateways of said subset in response to messages transmitted in uplink frames by terminals; choosing (701, 702) a gateway associated with a value representing a quality of communication with the sending terminal that is higher than or equal to a predefined quality threshold among the gateways in the predefined number of preselected gateways, the chosen gateway becoming the second gateway; transmitting (305) a request containing said response to the second gateway, said response being retransmitted (307) by the second gateway to said sending terminal in a frame, referred to as a downlink frame, at an instant indicated in the request, said instant being indicated in a time reference of the first gateway, the second gateway taking into account a clock difference between the first and second gateways in order to transmit a downlink frame at said instant.

2. Method according to claim 1, **characterised in that** the communication technology is the LoRa technology and each frame exchanged between a gateway and a terminal is in accordance with the LoRaWAN protocol.

3. Method according to claim 1 or 2, **characterised in that** the set of gateways comprises a plurality of subsets of gateways, each subset being formed by an operator from gateways able to stand in for each other in order to relay a response in a downlink frame to a message received in an uplink frame by one of them or by an adaptive procedure of formation of the subsets performed periodically under the control of the server with a predefined period.

4. Method according to claim 3, **characterised in that** the server transmits, to each gateway included in a subset, characteristics of said subset comprising an identifier for each gateway included in said subset and an identifier for each terminal associated in common between the gateways in the subset.

5. Method according to claim 3 or 4, **characterised in that** the adaptive procedure of formation of the subsets comprises:

classifying (501) the gateways in the set of gateways by decreasing order of the number of downlink frames that each gateway has sent during the last predefined period or by decreasing order of the number of uplink frames that each gateway has received during the last predefined period; running through (502) the gateways thus classified in their classification order and, for each gateway, classifying each terminal associated with said gateway by decreasing order of the number of uplink frames received from said terminal by said gateway during the last predefined period; running through (503) the gateways in the classification order thereof and, for each gateway, defining a subset of gateways from said gateway, said gateway being referred to as the base gateway, belonging to said subset, the definition of the subset comprising: as long as a number of terminals in a first set of terminals associated with the subset of gateways being defined is higher than a predefined percentage of the number of terminals in a second set of terminals associated with the base gateway (606): identifying (603), among the gateways thus classified that have not yet been inserted in the subset, a gateway having the most terminals in common with the base gateway; inserting (604) the gateway thus identified in the subset, and

forming (605) the first set of terminals as an intersection between the second set of terminals and each set of terminals associated with a gateway inserted in the subset; and eliminating each terminal included in the first set of terminals from the sets of terminals associated with the gateways thus classified.

6. Method according to claim 5, **characterised in that**, when the gateways are classified by decreasing order of the number of downlink frames that each gateway has sent during the last predefined period, only the gateways that have sent at least a predetermined number of downlink frames during the last predefined period are classified and, when the gateways are classified by decreasing order of the number of uplink frames that each gateway has received during the last predefined period, only the gateways that have received at least one predetermined number of uplink frames during the last predefined period are classified.

7. Method according to claim 5 or 6, **characterised in that**, when a gateway has been inserted in a subset formed from one base gateway, this gateway can no longer be inserted in a subset formed from all other base gateways.

8. Method according to claim 5, 6 or 7, **characterised in that** the adaptive procedure of forming the subsets stops when all the classified gateways have been inserted in a subset or when all the terminals in the network are included in a set of terminals associated with a subset.

9. Method according to any one of the preceding claims, **characterised in that** the clock difference existing between two gateways is determined by a synchronisation procedure, the synchronisation procedure being executed by one of the two gateways, referred to as an initiating gateway, in collaboration with the other gateway, referred to as a collaborating gateway, and comprising:

transmitting (400) an uplink frame intended for the collaborating gateway, the initiating gateway waiting (401) during a predetermined period before listening out for a response (402) to said uplink frame, said response being transmitted (406) in a downlink frame by the collaborating gateway after a period equal to the predetermined period following a reception (403) of said frame by the collaborating gateway, a first item of information representing an instant of reception of said request by the collaborating gateway to which the duration of the predetermined period being inserted in said response by the collaborating gateway has been added; receiving (407) said response and obtaining (408) a second item of information representing an instant of reception of said response by the second gateway; and calculating (409) the clock difference between the initiating gateway and the collaborating gateway as a difference between the second and first items of information.

10. Method according to claim 9, **characterised in that** the synchronisation procedure is executed in each subset for each pair of possible gateways in said subset, each gateway in a pair of gateways being alternately initiating or collaborating, at predefined regular intervals or adaptive intervals with durations dependent on a change in the clock differences over time.

11. Method according to any one of the preceding claims, **characterised in that** the second gateway is determined randomly in the subset of gateways comprising the first gateway or randomly among a predefined number of gateways in said subset offering a quality of communication with the sending terminal that is the highest among the gateways in said subset.

12. Method according to claim 1, **characterised in that**, when no gateway in the predefined number of gateways is associated with a value representing a quality of communication with the sending terminal higher than or equal to the predefined quality threshold, choosing a gateway in the subset associated with the lowest counter value among the values of counters associated with the gateways in said subset and associated with a value representing a quality of communication with the sending terminal higher than or equal to the predefined quality threshold; and, if no gateway in said subset is associated with a value representing a quality of communication with the sending terminal higher than or equal to the predefined quality threshold, choosing a gateway associated with the value representing a quality of communication with the sending terminal that is maximum among the values representing a quality of communication with the sending terminal that are associated with the gateways in said subset.

13. Method according to claim 1, **characterised in that**, when the server receives a plurality of requests each containing the same message sent in an uplink frame by a sending terminal associated with any subset, the method comprises:

choosing, among the first gateways that transferred said message to the server, a gateway wherein a quality of reception of said frame is higher than or equal to a predefined quality threshold; and

transmitting a request containing said response to the chosen gateway, said response being retransmitted by the chosen gateway to said sending terminal in a downlink frame.

14. Device of the server type (10) included in a long-range wireless network and affording low energy consumption, wherein terminals communicate with the server by means of gateways (11A, 11B) in a set of gateways according to a communication technology meaning that, when the server receives a message from a terminal via a first gateway, it fixes an instant at which the gateway must relay a response to said message according to an instant of reception of said message by said first gateway, each gateway being associated with a set of terminals comprising at least one terminal using said gateway for communicating with the server, he device comprising :

reception means for receiving (303) a request coming from a first gateway (11A) containing a message sent in a frame, referred to as an uplink frame, by a terminal (12), referred to as a sending terminal;

determination means for determining (304) a second gateway (11B) different from the first gateway to be used for relaying a response to said message intended for the sending terminal, the second gateway being determined in a subset of gateways in the set of gateways comprising the first gateway and at least one second gateway, each gateway in the subset being capable of relaying to a terminal a response to a message transmitted in an uplink frame by said terminal received by any other gateway in said subset, the gateways in the subset having at least one terminal associated in common and being associated with the sending terminal;, the determination means executing a choice procedure in order to determine the second gateway, comprising:

preselecting (700) a predefined number of gateways associated with the lowest counter values among the counter values associated with the gateways in said subset representing a number of downlink frames transmitted by the gateways of said subset in response to messages transmitted in uplink frames by terminals;

choosing (701, 702) a gateway associated with a value representing a quality of communication with the sending terminal that is higher than or equal to a predefined quality threshold among the gateways in the predefined number of preselected gateways, the chosen gateway becoming the second gateway;

transmission means for transmitting (305) a request containing said response to the second gateway, said response being retransmitted (307) by the second gateway to the sending terminal in a frame referred to as a downlink frame at an instant indicated in the request, said instant being indicated in a time reference of the first gateway, the second gateway taking into account a clock difference between the first and second gateways for transmitting a downlink frame at said instant.

15. System included in a long-range wireless network and affording low energy consumption, comprising a device of the server type according to claim 14, a plurality of terminals and a plurality of gateways, the plurality of gateways comprising subsets of gateways, each gateway in the subset being capable of relaying to a terminal a response to a message transmitted in an uplink frame by said terminal received by any other gateway in said subset, the gateways in the subset having at least one associated terminal in common.

16. Computer program, **characterised in that** it comprises instructions for implementing, by a device (100), all the steps of the method according to any one of claims 1 to 13 when said program is executed by a processor of said device (100).

17. Storage means, **characterised in that** they store a computer program comprising instructions for implementing, by a device (100), all the steps of the method according to any one of claims 1 to 13 when said program is executed by a processor of said device (100).

Fig. 1

Fig. 2A

Fig. 2B

11B       10       11A       12

| | | Recevoir trame | 301 | Transmettre trame | 300 |

| | Recevoir requête | 303 | Transmettre requête | 302 |

| | Déterminer seconde passerelle | 304 |

| Recevoir requête | 306 | Transmettre requête | 305 |

| Transmettre trame réponse | 307 | | Recevoir trame réponse | 308 |

Fig. 3

110B
Transmission trame vide ⟋ 400

110A
Réception trame vide ⟋ 403

Temporisation D ⟋ 401

Sauvegarde instant de réception trame vide ($CPTR_{110A}$) ⟋ 404

Ecoute réponse ⟋ 402

Temporisation D (1s) ⟋ 405

Réception réponse ⟋ 407

Transmission réponse avec ($CPTR_{110A} + D$) ⟋ 406

Sauvegarde instant de réception réponse ($CPTR_{110B}$) ⟋ 408

$\Delta = CPTR_{110B} - (CPTR_{110A} + D)$ ⟋ 409

Mémorisation $\Delta$ ⟋ 410

Attente durée T ⟋ 411

Fig. 4

Classement des passerelles par ordre décroissant du nombre de trames que chaque passerelle a émises vers les terminaux du réseau LoRa pendant la dernière période $P$ — 501

Pour chaque passerelle, classement des terminaux par ordre décroissant du nombre de trames reçues par la passerelle pendant la période $P$ — 502

Formation de sous-ensembles. — 503

Fig. 5A

Classement des passerelles par ordre décroissant du nombre de trames que chaque passerelle a reçues des terminaux du réseau LoRa pendant la dernière période $P$ — 511

Pour chaque passerelle, classement des terminaux par ordre décroissant du nombre de trames reçues par la passerelle pendant la période $P$ — 512

Formation de sous-ensembles. — 513

Fig. 5B

$$i=1$$
$$n'_p = N'_p$$
600

$$GT_i^{INTER} = GT_i$$
601

Passerelle restantes?
612

FIN
613

$$K = n'_p - 1$$
602

Identification d'une passerelle $GW_j$ ayant le plus de terminaux en commun avec la passerelle $GW_i$ parmi les $K$ passerelles restantes
603

Mise à jour
i et $n'_p$
611

Insertion $GW_j$ dans sous-ensemble associé à $GW_i$
604

oui          non

Terminaux restants?
610

$$GT_i^{INTER} = GT_i^{INTER} \cap GT_j$$
605

Suppression des terminaux appartenant à l'intersection
609

Nombre de terminaux $NB\_GT_i^{INTER} \geq Q \times M_i$?
606

non

oui

$$K = K - 1$$
607

non          $K=0$?          oui
608

## Fig. 6

Présélection L passerelles associées aux valeurs de compteurs les plus faibles ⌐ 700

Au moins une passerelle présélectionnée est telle que:
$Q_{i,k} \geq SQ$ ⌐ 701

non

oui

Choix passerelle parmi les passerelles présélectionnées ⌐ 702

Au moins une passerelle du sous-ensemble est telle que:
$Q_{i,k} \geq SQ$ ⌐ 703

non

oui

Choix passerelle ayant la valeur de $Q_{i,k}$ la plus élevée parmi les passerelles du sous-ensemble ⌐ 704

Choix passerelle ayant la valeur de compteur minimale parmi les passerelles du sous-ensemble telles que
$Q_{i,k} \geq SQ$ ⌐ 705

Fig. 7

## RÉFÉRENCES CITÉES DANS LA DESCRIPTION

**Documents brevets cités dans la description**

- WO 2016174396 A1

**Littérature non-brevet citée dans la description**

- en terminologie anglo-saxonne. *draft LoRaWAN 1.1,* Août 2015